# EUROPEAN PATENT SPECIFICATION

(11) **EP 2 753 188 B1**
(45) Date of publication and mention of the grant of the patent: **16.01.2019**
(21) Application number: 12758972.9
(22) Date of filing: 06.09.2012
(51) Int. Cl.: A23L 27/30, A23L 2/60

(54) **REBAUDIOSIDE D SWEETENERS AND CARBONATED COLA BEVEREGE SWEETENED WITH REBAUDIOSIDE D**
REBAUDIOSID-D-SÜSSSTOFFE UND MIT REBAUDIOSID-D GESÜSSTE KOHLENSÄUREHALTIGE KOLA GETRÄNKE
ÉDULCORANTS DE REBAUDIOSIDE D ET BOISSON GAZEUSE À BASE DE COLA EDULCORÉE AVEC LE REBAUDIOSIDE D

(30) Priority: 06.09.2011 US 201161531348 P
(43) Date of publication of application: 16.07.2014
(73) Proprietor: Pepsico, Inc., Purchase, NY 10577 (US)
(72) Inventor: LEE, Thomas, Scarsdale, NY 10583 (US); NATTRESS, Laura, Purchase, NY 10577 (US); RIHA, William, Somerset, NJ 08873 (US)
(74) Representative: Maiwald Patent- und Rechtsanwaltsgesellschaft mbH
(86) International application number: PCT/US2012/053949
(87) International publication number: WO 2013/066490

(56) References cited:
- WO-A1-2008/112852
- WO-A1-2011/028671
- US-A1- 2011 091 635
- US-A1- 2011 104 353
- US-A1- 2011 160 311
- US-A1- 2011 189 360

## Description

### FIELD OF THE INVENTION

This invention relates to food products, including beverage products, sweetened with rebaudioside D and rebaudioside A, for example, natural beverages and other natural beverage products that include rebaudioside D and rebaudioside A in a sweetening amount. In particular, this invention relates to rebaudioside D and rebaudioside A sweeteners and food products sweetened with rebaudioside D and rebaudioside A sweetener that are suitable to meet market demand for alternative nutritional characteristics and flavor profiles, for instance carbonated cola beverage products.

### BACKGROUND

There is a need for new beverage formulations which can adequately meet one or a combination of objectives, including nutritional characteristics, flavor, shelf life, and/or other objectives. Improved and new formulations for beverages and other foods are desirable to meet changing market demands. In particular, there is market demand for beverages and other foods having alternative nutritional characteristics, including, for example, lower calorie content. Also, there is perceived market demand for beverages having alternative flavor profiles, including, e.g., good taste, sweetness, etc. In addition, there is consumer interest in foods, including beverages and other beverage products, such as beverage concentrates etc., whose formulations are organic and/or all natural or make greater use of natural ingredients, that is, ingredients distilled, extracted, concentrated or similarly obtained from harvested plants and other naturally occurring sources, typically with limited or no further processing.

The development of new food and beverage formulations, for example, new beverage formulations employing alternative sweeteners, flavorants, flavor enhancing agents and the like, presents challenges in addressing associated bitterness and/or other off-tastes. Such challenges may be presented, for example, in developing new beverage formulations having alternative nutritional or flavor profiles. Thus, development of new, lower calorie beverage formulations has faced obstacles. For example, U.S. Patent No. 4,956,191 suggests that carbonated beverages which contain blends of saccharin or stevia extract with aspartame tend to be less organoleptically pleasing than those containing sugar. For example, it has been reported that, in addition to sweetness, certain steviol glycosides and other components of stevia extract exhibit bitterness or other off-tastes.

Steviol glycosides include potent, non-nutritive sweeteners, sweet-tasting compounds that can be extracted as a natural sweetener from the stevia plant (*Stevia rebaudiana* Bertoni). Typically, these compounds are found to include stevioside (in an amount of 4-13% dry weight), steviolbioside (in trace amounts), rebaudiosides, including primarily rebaudioside A (Reb A) along with rebaudioside B (Reb B), rebaudioside C (Reb C), rebaudioside D (Reb D), rebaudioside E (Reb E), and dulcosides, including dulcoside A (in an amount of 0.4-0.7% dry weight) and dulcoside B. Reb A is disclosed by the literature to be present in stevia plants at 2-4% (dry weight of leaves), and Reb A sweeteners are sold commercially. Other rebaudiosides are disclosed by the literature to be present in stevia plants at low amounts, including trace amounts of rebaudioside B, 1-2% (dry weight) of rebaudioside C, trace amounts of rebaudioside D, and trace amounts of rebaudioside E. Such low relative amounts often are further reduced by purification to increase the relative amount of Reb A in the sweetener. Steviol glycosides comprise a diterpene core (formula I) substituted at R¹ and R² with various combinations of hydrogen, glucose, rhamnose, and xylose.

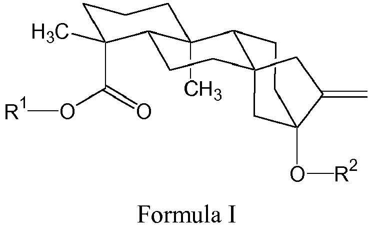

For example, R¹ may be hydrogen, 1-*β*-D-glucopyranosyl, or 2-(1-*β*-D-glucopyranosyl)-1-*β*-D-glucopyranosyl, and R² may be hydrogen, 1-*β*-D-glucopyranosyl, 2-(1-*β*-D-glucopyranosyl)-1-*β*-D-glucopyranosyl, 2,3-bis(1-*β*-D-glucopyranosyl)-1-*β*-D-glucopyranosyl, 2-(1-α-L-rhamnopyranosyl)-1-*β*-D-glucopyranosyl, 2-(1-α-L-rhamnopyranosyl)-3-(1-*β*-D-glucopyranosyl)-)-1-*β*-D-glucopyranosyl, or 2-(1-*β*-D-xylopyranosyl)-3-(1-*β*-D-glucopyranosyl)-1-*β*-D-glucopyranosyl. In Rebaudioside A the R¹ moiety is 1-*β-*D-glucopyranosyl and the R² moiety is 2,3-bis(1-*β*-D-glucopyranosyl)-1-*β*-D-glucopyranosyl).

While stevia leaves typically comprise only about 1.4 weight percent rebaudioside A, purification techniques often are used to increase the amount of rebaudioside A in the sweetener to at least about 85 weight percent Reb A or even 95 wt. % or 98 wt. % or more Reb A, with the balance being primarily residual amounts of the other steviol glycosides, etc. Reb A sweetener, that is, Reb A purified from stevia leaves or a stevia extract processed to increase the relative amount of Reb A, has been widely commercialized in the food industry. Since receiving GRAS status (i.e., the status of being "Generally Recognized As Safe,") an approval mechanism widely used in the food and beverage industry, Reb A sweetener has become a popular, naturally occurring, potent sweetener in foods and beverages. Reb A is approximately 200 times sweeter than sucrose. Unfortunately, the sweetness of Reb A sweeteners is accompanied by problems of off-tastes in many beverage formulations, especially, for example carbonated cola flavored beverages, for example slow on-set of sweetness, bitter aftertaste, licorice taste, and/or lingering aftertaste. In particular, bitter off-tastes are believed to have reduced commercialization of beverages sweetened with Reb A sweetener, such as diet carbonated soft drinks. For example, such off-tastes tend to be more perceptible in diet carbonated cola soft drinks sweetened with Reb A sweetener than in other beverage formulations, for instance in non-cola flavored diet carbonated soft drink formulations.

US 2011/0091635 A1 discloses a method for purifying rebaudioside D from the *Stevia rebaudiana* Bertoni plant extract along with rebaudioside A and provides a low-calorie carbonated drink containing the purified rebaudioside D and a process for making the low-calorie carbonated drink containing the purified rebaudioside D.

WO 2011/028671 A1 discloses the use of at least one of rebaudioside A or rebaudioside D in combination with one or more diterpene glycosides, and especially rebaudioside A in combination with rebaudioside C and/or dulcoside A, and stereoisomers thereof, for enhancing the sweet taste of carbohydrate sweeteners, such as sucrose and fructose. Further disclosed is the use of rebaudioside D in combination. with rebaudioside C and/or dulcoside A, and stereoisomers thereof, for enhancing the sweet taste of carbohydrate sweeteners.

It is therefore an object of the present invention to provide new sweeteners having desirable taste and nutritional characteristics. It is another object to provide food products, e.g., beverage products. It is an object of at least certain embodiments of the invention (that is, not necessarily all embodiments of the invention) to provide cola beverages and other beverage products having desirable taste properties and lower caloric content. It is an object of at least certain (but not necessarily all) embodiments of the invention to provide organic and/or all-natural beverages and other beverage products. These and other objects, features and advantages of the invention or of certain embodiments of the invention will be apparent to those skilled in the art from the following disclosure and description of exemplary embodiments.

### SUMMARY

The present invention relates to new sweeteners and to food and beverage products as further disclosed and described below, which comprise between 200 ppm and 700 ppm rebaudioside D (Reb D) and a sweetening amount of rebaudioside A (Reb A). Other aspects of the present invention relate to, for example, beverage products sweetened with Reb D and Reb A, including beverages (e.g., carbonated cola soft drinks), organic and/or natural beverages and other natural beverage products (i.e., beverage products made essentially of only organic or only natural ingredients). Reb D has a sweetness intensity similar to Reb A, but has been found to possess a more desirable taste profile than Reb A and many of the other steviol glycosides, e.g., in cola beverage products.

According to a first aspect, a carbonated cola beverage product is provided comprising carbonated water, acidulant comprising at least one acid, between 200 ppm and 700 ppm rebaudioside D, rebaudioside A present in a sweetening amount, and flavoring comprising cola flavoring. In certain embodiments the carbonated cola beverage product further comprises an additional sweetener, such as at least one sweetener selected from the group consisting of other rebaudiosides, sucrose, monatin, thaumatin, monellin, brazzein, L-alanine, glycine, Lo Han Guo, hernandulcin, phyllodulcin, trilobatin, and combinations of any of them. Optionally, every sweetening ingredient in the beverage product is a high intensity sweetener, for example, a natural high intensity sweetener. Optionally, one or more non-potent sweeteners are included in any of the beverage products disclosed here, for example, sucrose, high fructose corn syrup, erythritol, D-tagatose and/or others. According to certain embodiments, rebaudioside D provides at least 10% of the total sweetening of the carbonated cola beverage product, or at least 20% of the total sweetening, or at least 30% of the total sweetening, or at least 40% of the total sweetening, or at least half of the total sweetening, or at least 60% of the total sweetening, or at least 70% of the total sweetening, or at least 80% of the total sweetening, or at least 90% of the total sweetening. According to certain embodiments, rebaudioside D is at least 10 weight percent (sometimes abbreviated here as "wt. %" or "wt. percent" etc.) of the total weight of potent sweeteners in the cola beverage product. According to certain other embodiments, rebaudioside D is at least 20 wt. % of all potent sweeteners in the cola beverage product, or at least 30 wt. %, or at least 40 wt. %, or at least half of the total weight of potent sweeteners, or at least 60 wt. %, or at least 70 wt. %, or at least 80 wt. %, or at least 90 wt. %. According to certain other embodiments, rebaudioside D is at least 10 wt. % of all sweetener ingredients in the cola beverage product, or at least 20 wt. %, or at least 30 wt. %, or at least 40 wt. %, or at least half of the total weight of sweeteners, or at least 60 wt. %, or at least 70 wt. %, or at least 80 wt. %, or at least 90 wt. %. Optionally every sweetener ingredient in any such embodiments is a high intensity sweetener, i.e., a potent sweetener. Optionally every sweetener ingredient in any such embodiments is an organic sweetener. Optionally every sweetener ingredient in any such embodiments is a natural sweetener. Optionally every sweetener ingredient in any such embodiments is a rebaudioside. Optionally every sweetener ingredient in any such embodiments is a steviol glycoside.

According to exemplary embodiments of the invention, the at least one acid of the carbonated cola beverage product is selected from the group consisting of phosphoric acid, citric acid, malic acid, tartaric acid, formic acid, gluconic acid, lactic acid, fumaric acid, adipic acid, succinic acid, maleic acid, cinnamic acid, glutaric acid, and mixtures of any of them, or the acidulant comprises or consists essentially of lactic acid, tartaric acid and citric acid, or the acidulant comprises or consists essentially of lactic acid and at least one of tartaric and citric acids. The beverage product may comprise a beverage concentrate, or may comprise a diet carbonated cola soft drink. According to certain embodiments, the rebaudioside D sweetener has a purity of at least 95%, that is, it has at least 95% by weight of rebaudioside D. The rebaudioside D is optionally provided by a supersaturated solution of rebaudioside D or a thermally stable anhydrous form of rebaudioside D. Optionally, such supersaturated solution of rebaudioside D or thermally stable anhydrous form of rebaudioside D is added to a beverage concentrate, i.e., a syrup, during the production and bottling (or other packaging) of full strength (i.e., single strength or ready to drink) beverage.

According to the present invention, a carbonated cola beverage product is provided comprising carbonated water, acidulant comprising at least one acid, between 200 ppm and 700 ppm rebaudioside D, rebaudioside A present in a sweetening amount; and flavoring comprising cola flavoring.

It will be appreciated by those skilled in the art, given the benefit of the forgoing disclosure and the following description of certain exemplary embodiments of the Reb D sweeteners, food products, e.g., beverages and other beverage products disclosed here, that at least certain embodiments of the invention have improved or alternative formulations suitable to provide desirable taste profiles, nutritional characteristics, etc. These and other aspects, features and advantages of the invention or of certain embodiments of the invention will be further understood by those skilled in the art from the following description of exemplary embodiments.

### BRIEF DESCRIPTION OF THE DRAWINGS

The foregoing and other features and advantages of the present invention will be more fully understood from the following detailed description of illustrative embodiments taken in conjunction with the accompanying drawings in which:
**FIG. 1** depicts initial sweetness characteristics for various attributes of sweeteners in water: sucrose, aspartame, sucralose, rebaudioside A and rebaudioside D.
**FIG. 2** depicts sweetness perception for rebaudioside A.
**FIG. 3** depicts bitterness perception for rebaudioside A.
**FIG. 4** depicts sweetness perception for rebaudioside D and rebaudioside A.
**FIG. 5** depicts bitterness perception for rebaudioside D and rebaudioside A.
**FIG. 6** depicts initial sweetness characteristics for various attributes of sweeteners in water: 8.5 brix sucrose, 606 ppm rebaudioside A and 606 ppm rebaudioside D.
**FIG. 7** depicts initial sweetness characteristics for various attributes of sweeteners in water: 5.4 brix sucrose, 360 ppm rebaudioside A and 360 ppm rebaudioside D.
**FIG. 8** depicts initial sweetness characteristics for various attributes of sweeteners in water at several concentrations, of sucrose, rebaudioside A and rebaudioside D.
**FIG. 9** depicts relative sweet properties of sweeteners in water: 13.3 brix sucrose solution, 1200 ppm rebaudioside A and 1200 ppm rebaudioside D.
**FIG. 10** depicts relative sweet properties of sweeteners in water: 8.5 brix sucrose solution, 606 ppm rebaudioside A and 606 ppm rebaudioside D.
**FIG. 11** depicts relative sweet properties of sweeteners in water: 5.4 brix sucrose solution, 360 ppm rebaudioside A and 360 ppm rebaudioside D.
**FIG. 12** depicts relative sweet properties of sweeteners in water at several concentrations, of sucrose, rebaudioside A and rebaudioside D.
**FIG. 13** depicts initial sweetness characteristics for various attributes of 606 ppm of rebaudioside D in water, noncarbonated beverage base and carbonated beverage base.
**FIG. 14** depicts initial sweetness characteristics for various attributes of 606 ppm of rebaudioside A in water, noncarbonated beverage base and carbonated beverage base.
**FIG. 15** depicts initial sweetness characteristics for various attributes of 8.5 brix sucrose in water, noncarbonated beverage base and carbonated beverage base.
**FIG. 16** depicts initial sweetness characteristics for various attributes of 360 ppm of rebaudioside D in water, noncarbonated beverage base and carbonated beverage base.
**FIG. 17** depicts initial sweetness characteristics for various attributes of 360 ppm of rebaudioside A in water, noncarbonated beverage base and carbonated beverage base.
**FIG. 18** initial sweetness characteristics for various attributes of 5.4 brix sucrose in water, noncarbonated beverage base and carbonated beverage base.
**FIG. 19** depicts sweetness perception for 400 ppm of rebaudioside A and rebaudioside D and mixtures of the two, in carbonated cola beverage base.
**FIG. 20** depicts bitterness perception for 400 ppm of rebaudioside A and rebaudioside D and mixtures of the two, in carbonated cola beverage base.
**FIG. 21** depicts anise/licorice aftertaste perception for 400 ppm of rebaudioside A and rebaudioside D and mixtures of the two, in carbonated cola beverage base.

### DETAILED DESCRIPTION OF CERTAIN EXEMPLARY EMBODIMENTS

Various examples and embodiments of the inventive subject matter disclosed here are possible and will be apparent to the person of ordinary skill in the art, given the benefit of this disclosure. As used in this disclosure, the phrases "certain embodiments", "certain exemplary embodiments", "exemplary embodiments" and similar phrases mean that those embodiments are merely non-limiting examples of the inventive subject matter and that alternative or different embodiments are not being excluded. Unless otherwise indicated or unless otherwise clear from the context in which it is described, alternative elements or features in the embodiments and examples below and in the Summary above are interchangeable with each other. That is, an element described in one example may be interchanged or substituted for one or more corresponding elements described in another example. Similarly, optional or non-essential features disclosed in connection with a particular embodiment or example should be understood to be disclosed for use in any other embodiments of the disclosed subject matter. More generally, the elements of the examples should be understood to be disclosed generally for use with other aspects and examples of the devices and methods disclosed herein. A reference to a component or ingredient being operative, i.e., able to perform one or more functions, tasks and/or operations or the like, is intended to mean that it can perform the expressly recited function(s), task(s) and/or operation(s) in at least certain embodiments, and may well be operative to perform also one or more other functions, tasks and/or operations. While this disclosure includes specific examples, including presently preferred modes or embodiments, those skilled in the art will appreciate that there are numerous variations and modifications within the spirit and scope of the invention as set forth in the appended claims. Each word and phrase used in the claims is intended to include all its dictionary meanings consistent with its usage in this disclosure and/or with its technical and industry usage in any relevant technology area. Indefinite articles, such as "a," and "an" and the definite article "the" and other such words and phrases are used in the claims in the usual and traditional way in patents, to mean "at least one" or "one or more." The word "comprising" is used in the claims to have its traditional, open-ended meaning, that is, to mean that the product or process defined by the claim may optionally also have additional features, elements, etc. beyond those expressly recited.

Certain aspects of the present invention are based on the surprising discovery that rebaudioside D in an aqueous solution, e.g., in carbonated and non-carbonated cola flavored beverages (with or without other flavors as well) is more organoleptically pleasing than the same concentration (or same sweetening level) of rebaudioside A in such compositions. It should be understood, that as used here the term "rebaudioside D" means the steviol glycoside rebaudioside D, e.g., a stevia extract purified to increase the relative amount (concentration) of rebaudioside D, as discussed further below. As noted above, a drawback of the use of rebaudioside A as a sweetener is that it provides off-tastes, for instance bitterness, which is typically an undesirable organoleptic property for a sweetener.

As illustrated in the figures below, the chemical structure of Reb D is very similar to that of Reb A.

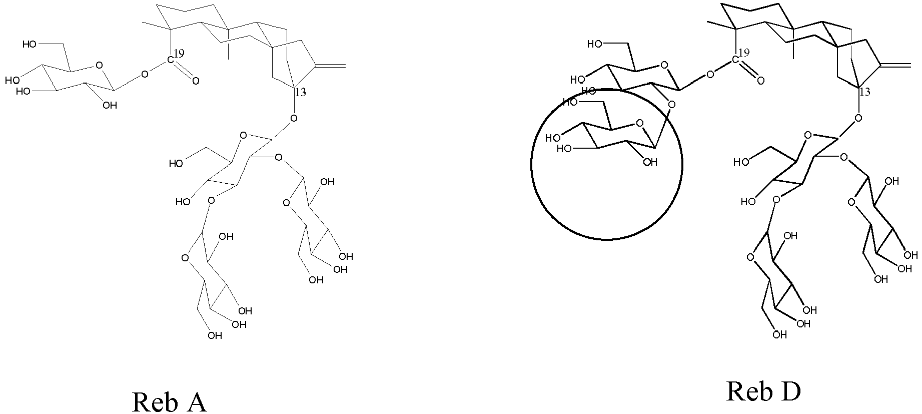

The difference between the compounds lies on the C-19 ester moiety. Reb A ester contains one glucose, whereas Reb D has glucosyl-glucose (see the circled area in the structure above).

In the book "Stevia, The genus Stevia", edited by A. Douglas Kinghorn (2002), the structural differences, sweetness intensity and quality of taste between the steviol glycosides is reported on page 138. The relative quality of taste, as compared to stevioside, (i.e., stevioside is rated 0) of rebaudioside D was rated higher (+3) than rebaudioside A was rated (+2). Particular taste attributes that contributed to the quality of taste, however, were not individually rated. The sweetness of rebaudioside A was reported to have a value of 242, whereas the sweetness of rebaudioside D was reported to have a value of 221. Accordingly, rebaudioside D was reported by Kinghorn to exhibit a sweetness that is approximately 10% less than the sweetness of rebaudioside A.

It has been unexpectedly discovered that rebaudioside D in an aqueous solution, an acidic aqueous solution, and an acidic aqueous carbonated solution provides significantly lower bitterness than the same concentration of rebaudioside A in otherwise identical formulations. It also has been unexpectedly discovered that rebaudioside D in an aqueous solution, an acidic aqueous solution, and an acidic aqueous carbonated solution, provides the same or significantly higher sweetness than the same concentration of rebaudioside A in otherwise identical formulations. This is surprising in view of the teaching of Kinghorn that rebaudioside D provides a lower sweetness than rebaudioside A.

As noted above, it has been determined that rebaudioside A off-tastes tend to be more problematic and perceptible in diet carbonated cola soft drinks, i.e., when rebaudioside A is used in a sweetening amount to sweeten carbonated cola soft drinks, than in other beverage formulations, for instance in non-cola flavored diet carbonated soft drink formulations (e.g., juice- or citrus-flavored beverage products). It has been surprisingly discovered that beverage products, such as diet carbonated cola soft drink beverage products, sweetened with rebaudioside D exhibit a better taste profile than if sweetened with rebaudioside A. In certain such embodiments the cola beverage sweetened with rebaudioside D has a sweetness more like that provided by sucrose than do beverage products sweetened with rebaudioside A. According to some aspects of the invention, a beverage product is provided comprising carbonated water, an acidulant comprising at least one acid, between 200 ppm and 700 ppm Reb D sweetener, and rebaudioside A in a sweetening amount. The beverage product is a diet carbonated cola soft drink containing cola flavoring.

The cola beverage products disclosed here, optionally include rebaudioside D in an amount in which the rebaudioside D provides at least 10 percent of the total sweetening of the beverage product. As used herein, the term "total sweetening of the beverage product" includes the sweetness of the beverage product contributed by any and all sweetening ingredients, as determined by a sensory test panel. A "sweetening ingredient" as that term is used here, is one that is itself sweet and which itself contributes sweetness in the beverage product perceptible to the sensory panel. As used herein, the term "rebaudioside A present in a sweetening amount" refers to rebaudioside A present in an amount sufficient to contribute sweetness in the beverage product perceptible to the sensory panel.

As an alternative to employing the non-natural acidulant phosphoric acid typically included in cola soft drink beverages, the at least one acid may optionally instead comprise one or more acids selected from the group consisting of citric acid, malic acid, tartaric acid, formic acid, gluconic acid, lactic acid, fumaric acid, adipic acid, succinic acid, maleic acid, cinnamic acid, glutaric acid, and mixtures of any of them. For instance, in certain embodiments the acidulant comprises no phosphoric acid and comprises or consists essentially of lactic acid, tartaric acid and citric acid, and in certain embodiments the acidulant comprises or consists essentially of lactic acid and at least one of tartaric and citric acids.

The water solubility of commercially available Reb D is low, thus, according to certain embodiments of the invention, rebaudioside D is provided as a supersaturated solution of rebaudioside D in the beverage products disclosed herein. As used herein, the term "saturated" refers to the point of maximum concentration at which a solution of a substance (e.g., a rebaudioside D solution) can dissolve no more of that substance. The saturation point of a substance depends on the temperature of the liquid the substance is to be dissolved in, as well as the chemical natures of the liquid and the substance involved (e.g., the water and/or the rebaudioside D). As used herein, the term "supersaturated" refers to a solution that contains more of a dissolved material (e.g., rebaudioside D) than a saturated solution. Supersaturated solutions are typically achieved when one or more conditions of a saturated solution is changed, such as, e.g., temperature, volume (e.g., by evaporation), pressure or the like.

Solutions referred to as supersaturated both here and in the appended claims are solutions in which the concentration of rebaudioside D is higher than can be dissolved without heating. Saturated and supersaturated solutions of rebaudioside D are described in detail in co-owned U.S. Utility Patent Application No. 12/700,223, filed February 4, 2010, entitled *"Method to Increase Solubility Limit of Rebaudioside D in an Aqueous Solution".*

According to certain embodiments of the invention, the rebaudioside D sweetener is provided as a thermally stable anhydrous form of rebaudioside D in the cola beverage products disclosed herein. As used with reference to forms of rebaudioside D, the term "anhydrous" means substantially anhydrous and, more specifically, either no or a reduced amount of hydrates associated with the rebaudioside D, such that it has the property or characteristic of forming, with heating, a stable aqueous solution of greater than 500 ppm and up to about 3000 ppm or more.

Hygroscopic activity may cause water to be absorbed into a quantity of anhydrous rebaudioside D upon exposure to moisture, including, e.g., exposure over time to water vapor in the ambient atmosphere. An elemental analysis of anhydrous rebaudioside D may show water for that reason. Rebaudioside D which has absorbed water due to hygroscopic activity is nevertheless anhydrous as that term is used here, if it has either no or a reduced amount of hydrates such as to have the property or characteristic of forming, with heating, a stable aqueous solution. The anhydrous compound suitable for use in at least certain exemplary embodiments of the sweeteners, solutions, components, products, compositions and methods disclosed here is understood to represent the formula: 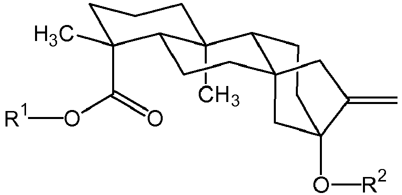 wherein R¹ is 2-(1-*β*-D-glucopyranosyl)-1-*β*-D-glucopyranosyl and R² is 2,3-bis(1-*β-*D-glucopyranosyl)-1-*β*-D-glucopyranosyl. The compound with this formula may also be referred to here and in the appended claims as anhydrous Reb D, or thermally stable anhydrous rebaudioside D. Thermally stable anhydrous forms of rebaudioside D are described in detail in co-owned U.S. Utility Application Serial No. 12/612,374, filed November 4, 2009, entitled *"Method to Improve Water Solubility of Rebaudioside D".*

In accordance with certain exemplary embodiments Reb D sweetener is provided as a supersaturated solution of rebaudioside D. The rebaudioside D optionally is provided as, or from, a purified extract having at least 10.0 wt. % rebaudioside D. Certain exemplary embodiments of Reb D sweeteners comprise even higher levels of rebaudioside D, either in the original extract or by purification of the original extract, e.g., at least 15 wt. % rebaudioside D, at least 20 wt. %, at least 30 wt. %, at least 40 wt. %, at least 50 wt. %, at least 60 wt. %, at least 70 wt. %, at least 80 wt. %, at least 85 wt. %, at least 90 wt. %, at least 93 wt. %, at least 95 wt. %, at least 97 wt. %, at least 98 wt. % or at least 99 wt. % rebaudioside D.

Other steviol glycosides, e.g., other rebaudiosides, stevioside, and related compounds may be obtained by extraction or the like from the stevia plant. Stevia (e.g., *Stevia rebaudiana* Bertoni) is a sweet-tasting plant. The leaves contain a complex mixture of natural sweet diterpene glycosides. Steviol glycosides and rebaudiosides are components of Stevia that contribute sweetness. As discussed above, typically, these compounds are found to include stevioside (4-13% dry weight), steviolbioside (trace), the rebaudiosides, including rebaudioside A (2-4%), rebaudioside B (trace), rebaudioside C (1-2%), rebaudioside D (trace), and rebaudioside E (trace), and dulcoside A (0.4-0.7%). The following non-sweet constituents also have been identified in the leaves of stevia plants: labdane, diterpene, triterpenes, sterols, flavonoids, volatile oil constituents, pigments, gums and inorganic matter. Generally, the cola beverage products disclosed herein optionally include at least one other steviol glycoside along with the rebaudioside D and the rebaudioside A, that is, a beverage product comprising rebaudioside D, may comprise, as well, rebaudioside B, rebaudioside C, rebaudioside E, stevioside, steviolbioside, dulcoside A, a *Stevia rebaudiana* extract, or mixtures of any of them.

Extracts of Stevia leaves may be purified to concentrate a selected component of the stevia extract. Given the benefit of this disclosure, it will be within the ability of one of skill in the art to purify a *Stevia rebaudiana* extract to selectively isolate a particular steviol glycoside. For example, column chromatography may be used to isolate rebaudioside D from the other steviol glycosides. Following chromatographic separation, rebaudioside D optionally is recrystallized at least once, or at least twice, or at least three times, to obtain a stevia extract comprising a desired level of purity of rebaudioside D. In certain embodiments of the invention, a stevia extract used as the Reb D sweetener in a cola or other beverage, disclosed here comprises rebaudioside D having a purity of 93% or greater, or 94% or greater, or 95% or greater, or 96% or greater, or 97% or greater, or 98% or greater, or 99% or greater, by weight of rebaudioside D. In certain exemplary embodiments, the "rebaudioside D" or "Reb D" sweetener used is a stevia extract with a Reb D concentration or purity of 93% or greater by weight.

In addition to rebaudioside D and rebaudioside A, optionally one or more additional sweeteners may be included in the cola beverage products disclosed here. Such optional additional sweeteners include natural and artificial or synthetic sweeteners. Suitable sweeteners and combinations of sweeteners are selected for the desired nutritional characteristics, taste profile for the beverage, mouthfeel and other organoleptic factors. According to certain exemplary embodiments of the cola beverage products disclosed here the total weight of sweetening ingredients comprises at least 10.0% by weight rebaudioside D. Certain exemplary embodiments of the cola beverage products disclosed here comprise rebaudioside D in an amount of at least 20% by weight of the total weight of sweetening ingredients. Certain exemplary embodiments of the cola beverage products disclosed here comprise rebaudioside D in an amount of at least 25% by weight of the total weight of sweetening ingredients. Certain exemplary embodiments of the cola beverage products disclosed here comprise rebaudioside D in an amount of at least 30% by weight of the total weight of sweetening ingredients. Certain exemplary embodiments of the cola beverage products disclosed here comprise rebaudioside D in an amount of at least 40% by weight of the total weight of sweetening ingredients. Certain exemplary embodiments of the cola beverage products disclosed here comprise rebaudioside D in an amount of at least 50% by weight of the total weight of sweetening ingredients. Certain exemplary embodiments of the cola beverage products disclosed here comprise rebaudioside D in an amount of at least 60% by weight of the total weight of sweetening ingredients. Certain exemplary embodiments of the cola beverage products disclosed here comprise rebaudioside D in an amount of at least 70% by weight of the total weight of sweetening ingredients. Certain exemplary embodiments of the cola beverage products disclosed here comprise rebaudioside D in an amount of at least 75% by weight of the total weight of sweetening ingredients. Certain exemplary embodiments of the cola beverage products disclosed here comprise rebaudioside D in an amount of at least 80% by weight of the total weight of sweetening ingredients. Certain exemplary embodiments of the cola beverage products disclosed here comprise rebaudioside D in an amount of at least 90% by weight of the total weight of sweetening ingredients.

According to certain embodiments of the cola beverage products disclosed here, the products include rebaudioside D in an amount in which the rebaudioside D provides at least 10 percent of the total sweetening of the beverage product. Certain exemplary embodiments of the cola beverage products disclosed here comprise rebaudioside D in an amount providing at least 20% of the total sweetening of the beverage product. Certain exemplary embodiments of the cola beverage products disclosed here comprise rebaudioside D in an amount providing at least 25% of the total sweetening of the beverage product. Certain exemplary embodiments of the cola beverage products disclosed here comprise rebaudioside D in an amount providing at least 30% of the total sweetening of the beverage product. Certain exemplary embodiments of the cola beverage products disclosed here comprise rebaudioside D in an amount providing at least 40% of the total sweetening of the beverage product. Certain exemplary embodiments of the cola beverage products disclosed here comprise rebaudioside D in an amount providing at least 50% of the total sweetening of the beverage product. Certain exemplary embodiments of the cola beverage products disclosed here comprise rebaudioside D in an amount providing at least 60% of the total sweetening of the beverage product. Certain exemplary embodiments of the cola beverage products disclosed here comprise rebaudioside D in an amount providing at least 70% of the total sweetening of the beverage product. Certain exemplary embodiments of the cola beverage products disclosed here comprise rebaudioside D in an amount providing at least 75% of the total sweetening of the beverage product. Certain exemplary embodiments of the cola beverage products disclosed here comprise rebaudioside D in an amount providing at least 80% of the total sweetening of the beverage product. Certain exemplary embodiments of the cola beverage products disclosed here comprise rebaudioside D in an amount providing at least 90% of the total sweetening of the beverage product.

It should be understood that reference in this disclosure to the sweetness or sweetening provided by rebaudioside D or by another sweetener means the sweetening provided in the context of the beverage product in question (i.e., a cola beverage product). Thus, for example, the sweetness or sweetening provided by the rebaudioside D content of a particular beverage formulation means the sweetness or sweetening provided by the rebaudioside D including any sweetness enhancing effect caused by other ingredients of the beverage. Likewise, the sweetening provided by another sweetener included in that beverage formulation means the sweetening provided by that sweetener including any sweetness enhancing effect caused by other ingredients of the beverage.

According to certain embodiments of the invention, a cola beverage product containing rebaudioside D and rebaudioside A comprises one or more other suitable ingredients, for example but without limitation, any one or more preservatives, taste modifiers or maskers, flavoring agents, other constituents extracted with the rebaudioside D, or a combination of any of these and/or other ingredients suitable for consumption. Other sweeteners optionally included in a beverage product containing Reb D and Reb A according to this disclosure include, e.g., any one or more natural or synthetic sweeteners. Such other included sweeteners may be potent sweeteners (i.e., at least twice as sweet as sucrose) or non-potent sweeteners. For example, such other sweeteners typically may be one or more other steviol glycosides extracted with the rebaudioside D, sucrose, one or more sweeteners such as thaumatin, monatin, monellin, brazzein, L-alanine glycine, Lo Han Guo, hernandulcin, phyllodulcin, and trilobatin, or a combination of any of them.

In certain exemplary embodiments, ready-to-drink cola beverage products are provided comprising water and Reb D as disclosed here, where rebaudioside D is present in the beverage in an amount (i.e., a concentration) of from 200 ppm to 700 ppm rebaudioside D in the beverage. Optionally, the beverage product further comprises one or more ingredients selected from the group consisting of acidulants, fruit juices and/or vegetable juices, pulp, etc., flavorings, color, preservative, vitamins, minerals, electrolytes, erythritol, tagatose, glycerine, and carbon dioxide. Such ingredients are further described below.

According to embodiments of the invention, a cola beverage product, is provided comprising water, acidulant comprising at least one acid, and Reb D as disclosed here. In certain exemplary embodiments of such beverage products, the Reb D may consist essentially of a stevia extract, e.g., a natural extract from stevia plant leaves, optionally a natural extract from stevia leaves that on a dry leaf weight basis have a rebaudioside D concentration of at least 3.0 wt. % rebaudioside D. In certain exemplary embodiments such a natural extract has been purified to have a purity of at least 90 wt. %, at least 93 wt. %, at least 95 wt. %, at least 97 wt. %, at least 98 wt. % or at least 99 wt. % rebaudioside D. In certain exemplary embodiments the beverage product comprises a purity of at least 93 wt. % rebaudioside D, or even at least 95 wt. % rebaudioside D, at least 97 wt. % rebaudioside D, or at least 99 wt. % rebaudioside D. Optionally, the Reb D is present in the cola beverage in an amount sufficient to provide rebaudioside D in a concentration of between 200 ppm and 700 ppm in the beverage.

Certain exemplary embodiments of the cola beverage products further comprise one or more other suitable beverage ingredients, for example, fruit juices and/or vegetable juices, pulp, etc., flavorings, color, preservative, vitamins, minerals, electrolytes, erythritol, tagatose, glycerine, and carbon dioxide, as further described below.

According to embodiments of the invention, a natural cola beverage product is provided comprising water, acidulant comprising at least one acid, and a stevia extract having (either as originally extracted or as then purified) a purity of at least 40 wt. % rebaudioside D, e.g., at least 50 wt. %, at least 60 wt. %, at least 70 wt. %,, at least 80 wt. %, at least 90 wt. %, or at least 95 wt. % rebaudioside D. According to certain exemplary embodiments, such natural beverage products further comprise one or more other beverage ingredients, as further described below.

Certain aspects of this disclosure relate to the "concentration" of a solution, which is taken to mean the amount of solute in a given amount of solvent or solution. There are many ways to express concentration. For example, concentration may be defined in units of mass per unit volume (e.g., mg/mL, mg/cm³ and the like), percent by mass (which is simply the mass of the solute divided by the total mass of the solution multiplied by 100% (e.g., weight percent, percent by weight, wt. percent, wt %, w/w, and the like)), percent by volume (which is simply the volume of the solute divided by the sum of the volumes of the other components multiplied by 100% (e.g., volume percent, percent by volume, v/v, and the like)), molarity (which is the number of moles of solute dissolved in one liter of solution), molality (which is the number of moles of solute dissolved in one kilogram of solvent), and parts per million (which is defined as the mass of the component in solution divided by the total mass of the solution multiplied by 10⁶ (e.g., ppm)).

It should be understood that the term "about" is used throughout this disclosure and the appended claims to account for ordinary inaccuracy and variability, such as in measurement, testing and the like, in product production, etc.

It should be understood that liquids, beverages and other beverage products in accordance with this disclosure may have any of numerous different specific formulations or constitutions. The formulation of a beverage product in accordance with this disclosure may vary to a certain extent, depending upon such factors as the product's intended market segment, its desired nutritional characteristics, flavor profile and the like. For example, it will generally be an option to add further ingredients to the formulation of a particular beverage embodiment, including any of the beverage formulations described below. Additional (i.e., more and/or other) sweeteners may be added, flavorings, electrolytes, vitamins, fruit juices or other fruit products, tastents, masking agents and the like, flavor enhancers, and/or carbonation typically may be added to any such formulations to vary the taste, mouthfeel, nutritional characteristics, etc. In general, a cola beverage product in accordance with this disclosure, typically comprises at least carbonated water, rebaudioside D, rebaudioside A, acidulant and flavoring. Exemplary flavorings which may be suitable for at least certain formulations in accordance with this disclosure include cola flavoring, citrus flavoring, spice flavorings and others. Carbonation in the form of carbon dioxide is added for effervescence. Preservatives may be added if desired, depending upon the other ingredients, production technique, desired shelf life, etc. Optionally, caffeine may be added. The beverages disclosed here are cola-flavored carbonated beverages, characteristically containing carbonated water, sweetener, kola nut extract and/or other flavoring, caramel coloring, at least one acid, and optionally other ingredients. Additional and alternative suitable ingredients will be recognized by those skilled in the art given the benefit of this disclosure.

The beverage products disclosed here include beverage products, i.e., ready-to-drink liquid formulations and the like. As used herein, the term "ready-to-drink" refers to a beverage that can be ingested as-is. That is, the ready-to-drink beverage requires no dilution or additions prior to ingestion by a consumer.

In certain exemplary embodiments of the ready-to-drink beverages disclosed here, the cola beverage product, comprises at least 200 ppm, about 300 ppm, about 400 ppm, about 500 ppm, about 600 ppm, or about 700 ppm rebaudioside D. In certain exemplary embodiments of the ready-to-drink beverages disclosed here the cola beverage product comprises between 200 ppm and 700 ppm, between about 300 ppm and about 700 ppm, between about 350 ppm and about 650 ppm, between about 400 ppm and about 600 ppm, or between 450 ppm and about 550 ppm rebaudioside D.

Natural embodiments of the beverage products disclosed here are natural in that they do not contain anything artificial or synthetic (including any color additives regardless of source) that would not normally be expected to be in the food. As used herein, therefore, a "natural" beverage composition is defined in accordance with the following guidelines: Raw materials for a natural ingredient exists or originates in nature. Biological synthesis involving fermentation and enzymes can be employed, but synthesis with chemical reagents is not utilized. Artificial colors, preservatives, and flavors are not considered natural ingredients. Ingredients may be processed or purified through certain specified techniques including at least: physical processes, fermentation, and enzymolysis. Appropriate processes and purification techniques include at least: absorption, adsorption, agglomeration, centrifugation, chopping, cooking (baking, frying, boiling, roasting), cooling, cutting, chromatography, coating, crystallization, digestion, drying (spray, freeze drying, vacuum), evaporation, distillation, electrophoresis, emulsification, encapsulation, extraction, extrusion, filtration, fermentation, grinding, infusion, maceration, microbiological (rennet, enzymes), mixing, peeling, percolation, refrigeration/freezing, squeezing, steeping, washing, heating, mixing, ion exchange, lyophilization, osmose, precipitation, salting out, sublimation, ultrasonic treatment, concentration, flocculation, homogenization, reconstitution, enzymolysis (using enzymes found in nature). Processing aids (currently defined as substances used as manufacturing aids to enhance the appeal or utility of a food component, including clarifying agents, catalysts, flocculants, filter aids, and crystallization inhibitors, etc. See 21 CFR § 170.3(o)(24)) are considered incidental additives and may be used if removed appropriately.

Substantially clear embodiments of the beverage products disclosed here are substantially clear in that the beverages have substantially no turbidity and substantially no color.

Water is a basic ingredient in the products disclosed here, i.e. cola beverage products, typically being the vehicle or primary liquid portion in which the Reb D is provided and the remaining ingredients in the beverage products are dissolved, emulsified, suspended or dispersed. Purified water can be used in the manufacture of certain embodiments of the beverage products disclosed here, and water of a standard beverage quality can be employed in order not to adversely affect beverage taste, odor, or appearance. The water typically will be clear, colorless, free from objectionable minerals, tastes and odors, free from organic matter, low in alkalinity and of acceptable microbiological quality based on industry and government standards applicable at the time of producing the beverage. In certain typical embodiments of beverage products, water is present at a level of from about 80% to about 99.9% by weight of the beverage. In at least certain exemplary embodiments the water used in beverages and concentrates disclosed here is "treated water," which refers to water that has been treated to reduce the total dissolved solids of the water prior to optional supplementation, e.g., with calcium as disclosed in U.S. Patent No. 7,052,725. Methods of producing treated water are known to those of ordinary skill in the art and include deionization, distillation, filtration and reverse osmosis ("r-o"), among others. The terms "treated water," "purified water," "demineralized water," "distilled water," and "r-o water" are understood to be generally synonymous in this discussion, referring to water from which substantially all mineral content has been removed, typically containing no more than about 500 ppm total dissolved solids, e.g. 250 ppm total dissolved solids.

As used herein, "taste" refers to a combination of sweetness perception, temporal effects of sweetness perception, i.e., on-set and duration, off-tastes, e.g. bitterness and metallic taste, residual perception (aftertaste) and tactile perception, e.g. body and thickness. As used herein, a "full-calorie" beverage formulation is one fully sweetened with a nutritive sweetener. The term "nutritive sweetener" refers generally to sweeteners which provide significant caloric content in typical usage amounts, e.g., more than about 5 calories per 8 oz. serving of beverage. As used herein, a "potent sweetener" means a sweetener which is at least twice as sweet as sugar, that is, a sweetener which on a weight basis requires no more than half the weight of sugar to achieve an equivalent sweetness. For example, a potent sweetener may require less than one-half the weight of sugar to achieve an equivalent sweetness in a beverage sweetened to a level of 10 degrees Brix with sugar. Potent sweeteners include both nutritive (e.g., Lo Han Guo juice concentrate) and non-nutritive sweeteners (e.g., typically, Lo Han Guo powder). In addition, potent sweeteners include both natural potent sweeteners (e.g., steviol glycosides, Lo Han Guo, etc.) and artificial potent sweeteners (e.g., neotame, etc.). However, for natural beverage products disclosed here, only natural potent sweeteners are employed. Commonly accepted potency figures for certain potent sweeteners include, for example,

| | |
|---|---|
| Cyclamate | 30 times as sweet as sugar |
| Stevioside | 100-250 times as sweet as sugar |
| Mogroside V | 100-300 times as sweet as sugar |
| Rebaudioside A | 150-200 times as sweet as sugar |
| Rebaudioside D | 150-300 times as sweet as sugar |
| Acesulfame-K | 200 times as sweet as sugar |
| Aspertame | 200 times as sweet as sugar |
| Saccharin | 300 times as sweet as sugar |
| Neohesperidin dihydrochalcone | 300 times as sweet as sugar |
| Sucralose | 600 times as sweet as sugar |
| Neotame | 8,000 times as sweet as sugar |

Sweeteners suitable for combination with rebaudioside D and rebaudioside A in at least certain exemplary embodiments of cola beverage products disclosed here include, for example, sugar alcohols such as sorbitol, mannitol, xylitol, lactitol, isomalt, and malitol. Other sweeteners include tagatose, e.g., D-tagatose, and combinations of tagatose with the sugar alcohol erythritol.

As further discussed below, exemplary natural nutritive sweeteners suitable for some or all embodiments of the cola beverage products disclosed here, include crystalline or liquid sucrose, fructose, glucose, dextrose, maltose, trehalose, fructo-oligosaccharides, glucose-fructose syrup from natural sources such as apple, chicory, honey, etc., e.g., high fructose corn syrup, invert sugar and the like and mixtures of any of them; exemplary artificial sweeteners suitable for some or all embodiments of the beverages disclosed here include saccharin, cyclamate, aspartame, other dipeptides, acesulfame potassium, and other such potent sweeteners, and mixtures of any of them; and exemplary natural non-nutritive potent sweeteners suitable for some or all embodiments of the beverages including Reb D and Reb A disclosed here include steviol glycosides (e.g., stevioside, steviolbioside, dulcoside A, rebaudioside B, rebaudioside C, rebaudioside E, mixtures of any of them, etc.) and Lo Han Guo and related compounds, and mixtures of any of them. Lo Han Guo is a potent sweetener which can be provided as a natural nutritive or natural non-nutritive sweetener. For example, Lo Han Guo juice concentrate may be a nutritive sweetener, and Lo Han Guo powder may be a non-nutritive sweetener. Also, in at least certain exemplary embodiments of the beverage products disclosed here (e.g., cola beverage products), combinations of one or more natural nutritive sweeteners, one or more artificial sweeteners and/or one or more natural non-nutritive potent sweeteners are used to provide the sweetness and other aspects of desired taste profile and nutritive characteristics. It should also be recognized that certain such sweeteners will, either in addition or instead, act as tastents, masking agents or the like in various embodiments of the beverages disclosed here, e.g., when used in amounts below its (or their) sweetness perception threshold in the beverage in question. For instance, erythritol acts as a bitterness masking agent according to embodiments of the invention.

The sweeteners included in the formulations of the cola beverage products disclosed here, are edible consumables suitable for consumption and for use in beverages. By "edible consumables" is meant a beverage or an ingredient of a beverage for human or animal consumption. The sweetener or sweetening agent used here and in the claims may be a nutritive or non-nutritive, natural or synthetic beverage ingredient or additive (or mixtures of them) which provides sweetness to the beverage, i.e., which is perceived as sweet by the sense of taste. The perception of flavoring agents and sweetening agents may depend to some extent on the interrelation of elements. Flavor and sweetness may also be perceived separately, i.e., flavor and sweetness perception may be both dependent upon each other and independent of each other. For example, when a large amount of a flavoring agent is used, a small amount of a sweetening agent may be readily perceptible and vice versa. Thus, the oral and olfactory interaction between a flavoring agent and a sweetening agent may involve the interrelationship of elements.

In at least certain exemplary embodiments of cola beverage products disclosed here, the sweetener component may include as an optional additional sweetener, nutritive, natural crystalline or liquid sweeteners such as sucrose, liquid sucrose, fructose, liquid fructose, glucose, liquid glucose, glucose-fructose syrup from natural sources such as apple, chicory, honey, etc., e.g., high fructose corn syrup, invert sugar, maple syrup, maple sugar, honey, brown sugar molasses, e.g., cane molasses, such as first molasses, second molasses, blackstrap molasses, and sugar beet molasses, sorghum syrup, and/or others. Such sweeteners are present in at least certain exemplary embodiments in an amount of from about 0.1% to about 20% by weight of the beverage, such as from about 6% to about 16% by weight, depending upon the desired level of sweetness for the beverage product. To achieve desired uniformity, texture and taste, in certain exemplary embodiments of the natural beverage products disclosed here, standardized liquid sugars as are commonly employed in the food industry can be used. Typically such standardized sweeteners are free of traces of non-sugar solids which could adversely affect the flavor, color or consistency of the beverage product.

The term "nutritive sweetener" refers generally to sweeteners which provide significant caloric content in typical usage amounts, e.g., more than about 5 calories per 8 oz. serving of beverage. As used herein, a "full-calorie" beverage formulation is one fully sweetened with a nutritive sweetener. As used herein, a "non-nutritive sweetener" is one which does not provide significant caloric content in typical usage amounts, i.e., is one which imparts less than 5 calories per 8 oz. serving of beverage to achieve the sweetness equivalent of 10 Brix of sugar. As used herein, "reduced calorie beverage" means a beverage having at least a 25% reduction in calories per 8 oz. serving of beverage as compared to the full calorie version, typically a previously commercialized full-calorie version. In at least certain embodiments, a reduced calorie beverage has about a 50% reduction in calories per 8 oz. serving as compared to the full calorie version. As used herein, a "low-calorie beverage" has fewer than 40 calories per 8 oz. serving of beverage. As used herein, "zero-calorie" or "diet" means having less than 5 calories per serving, e.g., per 8 oz. for beverages.

Artificial and natural non-nutritive potent sweeteners are suitable for inclusion as supplementary sweetener in at least certain exemplary embodiments of the cola beverage products disclosed here. Such artificial potent sweeteners include, for example, peptide based sweeteners, for example, aspartame, neotame, and alitame, and non-peptide based sweeteners, for example, sodium saccharin, calcium saccharin, acesulfame potassium, sodium cyclamate, calcium cyclamate, neohesperidin dihydrochalcone, and sucralose. In certain exemplary embodiments, a beverage product comprising Reb D and Reb A further comprises a supplementary sweetener, for example, aspartame, either alone or with one or more other supplementary sweeteners. In certain other exemplary embodiments the supplementary sweetener comprises or consists essentially of aspartame and acesulfame potassium. Natural non-nutritive potent sweeteners suitable for use in at least certain embodiments as a supplementary sweetener for the rebaudioside D and rebaudioside A include, for example, other steviol glycosides (e.g., stevioside, steviolbioside, dulcoside A, rebaudioside B, rebaudioside C, rebaudioside E, mixtures of any of them, etc.), Lo Han Guo and related compounds, as discussed further below. Non-nutritive, high potency sweeteners typically are employed in beverages disclosed here, including for example cola beverages, at a level of milligrams per fluid ounce of beverage, according to their sweetening power, any applicable regulatory provisions of the country where the beverage is to be marketed, the desired level of sweetness of the beverage, etc. It will be within the ability of those skilled in the art, given the benefit of this disclosure, to select suitable additional or alternative sweeteners for use with Reb D and Reb A in various embodiments of the beverage products disclosed here.

The sweetener Lo Han Guo, which has various different spellings and pronunciations, may be used as a supplementary sweetener in at least certain cola beverage products comprising Reb D and Reb A. Lo Han Guo may be obtained from fruit of the plant family Cucurbitaceae, tribe Jollifieae, subtribe Thladianthinae, genus Siraitia. Lo Han Guo often is obtained from the genus/species S. grosvenorii, S. siamensis, S. silomaradjae, S. sikkimensis, S. africana, S. borneensis, and S. taiwaniana. Suitable fruit includes that of the genus/species S. grosvenorii, which is often called Luo Han fruit. Lo Han Guo contains triterpene glycosides or mogrosides, which constituents may be used as Lo Han Guo sweeteners. Luo Han Guo may be used as the juice or juice concentrate, powder, etc. LHG juice concentrate may contain about 3 wt.% to about 12 wt.%, e.g., about 6 wt.% mogrosides, such as mogroside V, mogroside IV, (11-oxo-mogroside V), siamenoside and mixtures thereof. Lo Han Guo may be produced, for example, as discussed in U.S. patent No. 5,411,755. Sweeteners from other fruits, vegetables or plants also may be used as natural or processed sweeteners or sweetness enhancers in at least certain exemplary embodiments of the beverage products disclosed here.

Other sweeteners suitable for use as a supplementary sweetener in at least certain exemplary embodiments of the cola beverage products disclosed here, include glycyrrhizin, neohesperidin dihydrochalcone, lactose, xylose, arabinose and ribose, and sweeteners such as thaumatin, monatin, monellin, brazzein, L-alanine, glycine, Lo Han Guo, hernandulcin, phyllodulcin, and trilobatin.

Certain aspects of the present invention pertain to stirring the liquids, beverages, beverage products and various other components described herein. The term "mixing," as used herein includes, but is not limited to, beating, blending, stirring, high shear stirring, low shear stirring, whipping, folding in, sonicating, sifting, pureeing, and the like.

pH is a measure of the acidity or basicity of a solution. As used herein, the term "low pH" refers to an acidic pH below pH 6, such as in the range of about 1 to about 6. Certain exemplary embodiments of the beverages disclosed here (e.g., cola beverage products) have a pH in the range of about 2.0 to 5.0, or in the range of about 2.5 to 4.0, or in the range of about 2.8 to 3.3 or in the range of about 3.0 to 3.2. As used herein, the term "high pH" refers to a basic pH in the range of about 8 to about 14. As used herein, the term "neutral pH" refers to a pH of about 7 (e.g., from about 6.0 to 8.0., or in the range of about 6.5 to about 7.5). Certain exemplary embodiments of the beverages disclosed here have a high pH, e.g., a pH in the range of about pH 8 to 14. Certain exemplary embodiments of the beverage products disclosed here have a neutral pH, e.g., a pH in the range of about pH 6 to pH 8, or in the range of about pH 6.5 to 7.5.

An acidulant comprising at least one edible acid used in certain embodiments the beverage products disclosed herein, including for instance cola beverages, may serve any one or more of several functions, including, for example, lending tartness to the taste of the beverage, enhancing palatability, increasing thirst quenching effect, modifying sweetness and acting as a mild preservative. Suitable acids are known and will be apparent to those skilled in the art given the benefit of this disclosure. Exemplary acids suitable for use in some or all embodiments of the beverage products disclosed here include phosphoric acid, citric acid, malic acid, tartaric acid, lactic acid, fumaric acid, ascorbic acid, gluconic acid, succinic acid, maleic acid, adipic acid, cinnamic acid, glutaric acid, and mixtures of any of them. Typically, the acid is phosphoric acid, citric acid, malic acid, or combinations of any of them, such as, e.g., phosphoric acid and citric acid. In embodiments comprising natural beverage products (e.g., natural cola beverage products), the acid is selected from the group consisting of citric acid, malic acid, tartaric acid, formic acid, gluconic acid, lactic acid, fumaric acid, adipic acid, succinic acid, maleic acid, cinnamic acid, glutaric acid, and mixtures of any of them. For instance, in certain embodiments the acid comprises or consists essentially of lactic acid, tartaric acid and citric acid, and in certain embodiments the acid comprises or consists essentially of lactic acid and at least one of tartaric and citric acids.

Titratable acidity is an indication of the total acidity of a beverage product. Titratable acidity measures the amount of alkali required to neutralize the acid of a given volume of beverage. The titratable acidity is the milliliter of 0.1 N NaOH required to titrate 100 ml of beverage to a pH 8.75 end point with a potentiometer. The titratable acidity of certain embodiments of the beverage products disclosed here (e.g., cola beverage products) and at least one acid is typically about 8.75 to about 10.5, or from about 9 to about 10. Suitable titratable acidities include, e.g., about 9, 9.25, 9.5, 9.75, 10, or 10.25.

The acid may be used in solution form, for example, and in an amount sufficient to provide the desired pH of the beverage. The particular acid or acids chosen and the amount used will depend, in part, on the other ingredients, the desired shelf life of the beverage product, as well as effects on the beverage pH, titratable acidity, and taste. Typically, for example, the one or more acids of the acidulant are used in an amount, collectively, of from about 0.01% to about 1.0% by weight of the beverage, e.g., from about 0.01% to about 0.5% by weight, from about 0.05% to about 0.5% by weight, from about 0.05% to about 0.25% by weight, from about 0.1% to about 0.25% by weight, depending upon the acidulant used, desired pH, other ingredients used, etc., of the beverage product (e.g., a cola beverage product). The pH of at least certain exemplary embodiments of the beverages disclosed here may be a value within the range of from about 2.0 to 5.0, about 2.5 to 4.0, about 2.8 to 3.3 or about 3.0 to 3.2., e.g., 3.1. The acid in certain exemplary embodiments enhances beverage flavor. Too much acid may impair the beverage flavor and result in tartness or other off-taste, while too little acid may make the beverage taste flat.

Those skilled in the art, given the benefit of this disclosure, will recognize that when preparing cola beverage products containing sweeteners in addition to Reb D and Reb A, such as peptide-based artificial sweeteners, such as aspartame, the resulting beverage composition is best maintained below a certain pH to retain the sweetening effect of the artificial sweetener. In the formation of calcium-supplemented beverages, the presence of calcium salt(s) may require additional acids to both assist the dissolution of the salt and maintain a desirable pH for stability of the artificial sweetener. The presence of the additional acid in the beverage composition, which increases the titratable acidity of the composition, will result in a more tart or sour taste to the resulting beverage. It will be within the ability of those skilled in the art, given the benefit of this disclosure, to select a suitable acid or combination of acids and the amounts of such acids for the acidulant component of any particular embodiment of the beverage products disclosed here.

Certain exemplary embodiments of the cola beverage products disclosed here, also may contain small amounts of alkaline agents, e.g., to adjust pH or for other purposes. Such agents include, e.g., potassium citrate and sodium citrate. For example, the alkaline agent potassium hydroxide may be used in an amount of from about 0.005 wt.% to about 0.02 wt.% (by weight of the beverage), with an amount of about 0.01% being typical for certain beverages. The amount will depend, of course, on the type of alkaline agents and on the degree to which the pH is to be adjusted.

The beverage products disclosed here optionally contain a flavor composition, for example, natural and synthetic fruit flavors, botanical flavors, other flavors, and mixtures thereof. As used here, the term "fruit flavor" refers generally to those flavors derived from the edible reproductive part of a seed plant. Included are both those wherein a sweet pulp is associated with the seed, e.g., banana, tomato, cranberry and the like, and those having a small, fleshy berry. The term berry also is used here to include aggregate fruits, i.e., not "true" berries, but fruit commonly accepted as such. Also included within the term "fruit flavor" are synthetically prepared flavors made to simulate fruit flavors derived from natural sources. Examples of suitable fruit or berry sources include whole berries or portions thereof, berry juice, berry juice concentrates, berry purees and blends thereof, dried berry powders, dried berry juice powders, and the like.

Exemplary fruit flavors include the citrus flavors, e.g., orange, lemon, lime grapefruit, tangerine, mandarin orange, tangelo, and pomelo, and such flavors as apple, grape, cherry, and pineapple flavors and the like, and mixtures thereof. In certain exemplary embodiments the beverage concentrates and other beverage products comprise a fruit flavor component, e.g., a juice concentrate or juice. As used here, the term "botanical flavor" refers to flavors derived from parts of a plant other than the fruit. As such, botanical flavors may include those flavors derived from essential oils and extracts of nuts, bark, roots and leaves. Also included within the term "botanical flavor" are synthetically prepared flavors made to simulate botanical flavors derived from natural sources. Examples of such flavors include cola flavors, tea flavors, and the like, and mixtures thereof. The flavor component may further comprise a blend of several of the above-mentioned flavors. In certain exemplary embodiments of the beverage concentrates and beverages a cola flavor component is used or a tea flavor component. The particular amount of the flavor component useful for imparting flavor characteristics to the beverage products of the present invention will depend upon the flavor(s) selected, the flavor impression desired, and the form of the flavor component. Those skilled in the art, given the benefit of this disclosure, will be readily able to determine the amount of any particular flavor component(s) used to achieve the desired flavor impression.

Juices suitable for use in at least certain exemplary embodiments of the cola beverage products disclosed here, include, e.g., fruit, vegetable and berry juices. Juices may be employed in the present invention in the form of a concentrate, puree, single-strength juice, or other suitable forms. The term "juice" as used here includes single-strength fruit, berry, or vegetable juice, as well as concentrates, purees, milks, and other forms. Multiple different fruit, vegetable and/or berry juices may be combined, optionally along with other flavorings, to generate a beverage having the desired flavor. Examples of suitable juice sources include plum, prune, date, currant, fig, grape, raisin, cranberry, pineapple, peach, banana, apple, pear, guava, apricot, Saskatoon berry, blueberry, plains berry, prairie berry, mulberry, elderberry, Barbados cherry (acerola cherry), choke cherry, date, coconut, olive, raspberry, strawberry, huckleberry, loganberry, currant, dewberry, boysenberry, kiwi, cherry, blackberry, quince, buckthorn, passion fruit, sloe, rowan, gooseberry, cashew apple, pomegranate, persimmon, mango, rhubarb, papaya, litchi, lemon, orange, lime, tangerine, mandarin and grapefruit etc. Numerous additional and alternative juices suitable for use in at least certain exemplary embodiments will be apparent to those skilled in the art given the benefit of this disclosure. In the beverages of the present invention employing juice, juice may be used, for example, at a level of at least about 0.2% by weight of the beverage. In certain exemplary embodiments juice is employed at a level of from about 0.2% to about 40% by weight of the beverage. Typically, juice may be used, if at all, in an amount of from about 1% to about 20% by weight.

Certain such juices which are lighter in color may be included in the formulation of certain exemplary embodiments to adjust the flavor and/or increase the juice content of the beverage without darkening the beverage color. Examples of such juices include apple, pear, pineapple, peach, lemon, lime, orange, apricot, grapefruit, tangerine, rhubarb, cassis, quince, passion fruit, papaya, mango, guava, litchi, kiwi, mandarin, coconut, and banana. Deflavored and decolored juices may be employed if desired.

Other flavorings suitable for use in at least certain exemplary embodiments of the beverage products disclosed here include, e.g., spice flavorings, such as cassia, clove, cinnamon, pepper, ginger, vanilla spice flavorings, cardamom, coriander, root beer, sassafras, ginseng, and others. Numerous additional and alternative flavorings suitable for use in at least certain exemplary embodiments will be apparent to those skilled in the art given the benefit of this disclosure. Flavorings may be in the form of an extract, oleoresin, juice concentrate, bottler's base, or other forms known in the art. In at least certain exemplary embodiments, such spice or other flavors complement that of a juice or juice combination.

The one or more flavorings may be used in the form of an emulsion. A flavoring emulsion may be prepared by mixing some or all of the flavorings together, optionally together with other ingredients of the beverage, and an emulsifying agent. The emulsifying agent may be added with or after the flavorings mixed together. In certain exemplary embodiments the emulsifying agent is water-soluble. Exemplary suitable emulsifying agents include gum acacia, modified starch, carboxymethylcellulose, gum tragacanth, gum ghatti and other suitable gums. Additional suitable emulsifying agents will be apparent to those skilled in the art of beverage formulations, given the benefit of this disclosure. The emulsifier in exemplary embodiments comprises greater than about 3% of the mixture of flavorings and emulsifier. In certain exemplary embodiments the emulsifier is from about 5% to about 30% of the mixture.

Carbon dioxide is used to provide effervescence to the cola beverages disclosed here. Any of the techniques and carbonating equipment known in the art for carbonating beverages may be employed. Carbon dioxide may enhance the beverage taste and appearance and may aid in safeguarding the beverage purity by inhibiting and destroying objectionable bacteria. In certain embodiments, for example, the beverage has a CO₂ level up to about 4.0 volumes carbon dioxide. Typical embodiments may have, for example, from about 0.5 to 5.0 volumes of carbon dioxide. As used here and independent claims, one volume of carbon dioxide is defined as the amount of carbon dioxide absorbed by any given quantity of liquid, e.g., water at 60° F (16° C) and one atmospheric pressure. A volume of gas occupies the same space as does the liquid by which it is dissolved. The carbon dioxide content may be selected by those skilled in the art based on the desired level of effervescence and the impact of the carbon dioxide on the taste or mouthfeel of the beverage. The carbonation may be natural or synthetic.

Optionally, caffeine may be added to various embodiments of the beverage products disclosed here, including for example cola beverage products. The amount of caffeine added is determined by the desired beverage properties, any applicable regulatory provisions of the country where the beverage is to be marketed, etc. In certain exemplary embodiments caffeine is included at a level of 0.02 percent or less by weight of the beverage. The caffeine must be of purity acceptable for use in foods and beverages. The caffeine may be natural or synthetic in origin.

The cola beverage products, disclosed here may contain additional ingredients compatible with Reb D, including, generally, any of those typically found in comestible formulations. These additional ingredients, for example, may typically be added to a stabilized beverage concentrate. Examples of such additional ingredients include, but are not limited to, caffeine, caramel and other coloring agents or dyes, antifoaming agents, gums, emulsifiers, tea solids, cloud components, and mineral and non-mineral nutritional supplements. Examples of non-mineral nutritional supplement ingredients are known to those of ordinary skill in the art and include, for example, antioxidants and vitamins, including Vitamins A, D, E (tocopherol), C (ascorbic acid), B (thiamine), B₂ (riboflavin), B₆, B₁₂, and K, niacin, folic acid, biotin, and combinations of any of them. The optional non-mineral nutritional supplements are typically present in amounts generally accepted under good manufacturing practices. Exemplary amounts are between about 1% and about 100% RDV, where such RDV are established. In certain exemplary embodiments the non-mineral nutritional supplement ingredient(s) are present in an amount of from about 5% to about 20% RDV, where established.

Preservatives may be used in at least certain embodiments of the beverage products disclosed here, including for example cola beverage products. That is, at least certain exemplary embodiments contain an optional preservative system. For example, solutions with a pH below 4 and especially those below 3 typically are "microstable," i.e., they resist growth of microorganisms, and so are suitable for longer term storage prior to consumption without the need for further preservatives. However, an additional preservative system may be used if desired. If a preservative system is used, it may be added to the beverage product at any suitable time during production, e.g., in some cases prior to the addition of Reb D. As used here, the terms "preservation system" or "preservatives" include all suitable preservatives approved for use in food and beverage compositions, including, without limitation, such known chemical preservatives as benzoates, e.g., sodium, calcium, and potassium benzoate, sorbates, e.g., sodium, calcium, and potassium sorbate, citrates, e.g., sodium citrate and potassium citrate, polyphosphates, e.g., sodium hexametaphosphate (SHMP), and mixtures thereof, and antioxidants such as ascorbic acid, EDTA, BHA, BHT, TBHQ, dehydroacetic acid, dimethyldicarbonate, ethoxyquin, heptylparaben, and combinations of any of them. Preservatives may be used in amounts not exceeding mandated maximum levels under applicable laws and regulations. The level of preservative used typically is adjusted according to the planned final product pH, as well as an evaluation of the microbiological spoilage potential of the particular beverage formulation. The maximum level employed typically is about 0.05% by weight of the beverage. It will be within the ability of those skilled in the art, given the benefit of this disclosure, to select a suitable preservative or combination of preservatives for beverages according to this disclosure.

Other methods of food or beverage preservation suitable for at least certain exemplary embodiments of the beverage products disclosed here (e.g., cola beverage products) include, e.g., aseptic packaging and/or heat treatment or thermal processing steps, such as hot filling and tunnel pasteurization. Such steps can be used to reduce yeast, mold and microbial growth in the beverage products. For example, U.S. Patent No. 4,830,862 to Braun et al. discloses the use of pasteurization in the production of fruit juice beverages as well as the use of suitable preservatives in carbonated beverages. U.S. Patent No. 4,925,686 to Kastin discloses a heat-pasteurized freezable fruit juice composition which contains sodium benzoate and potassium sorbate. In general, heat treatment includes hot fill methods typically using high temperatures for a short time, e.g., about 190° F for 10 seconds, tunnel pasteurization methods typically using lower temperatures for a longer time, e.g., about 160° F for 10-15 minutes, and retort methods typically using, e.g., about 250° F for 3-5 minutes at elevated pressure, i.e., at pressure above 1 atmosphere.

The following examples are specific embodiments of the present invention but are not intended to limit it.

### Reference Example 1

Sensory evaluations of different sweeteners at various concentrations were performed to provide comparative analysis of organoleptic characteristics of aqueous solutions of rebaudioside D, versus other sweeteners. The rebaudioside D was a stevia extract having a purity of at least 93% by weight rebaudioside D (Reb D). Initial sweetness characteristics of three concentrations of such Reb D in water were determined by a sensory panel of twelve testers. Sensory panels are well known to those of skill in the art, and comprise testers trained to evaluate the organoleptic attributes of comestibles. Typically, sensory panelists have been screened for their taste acuity and extensively trained in the use of standardized vocabulary to describe the appearance, aroma, flavor, mouthfeel and aftertaste of a wide variety of products, as well as scaling techniques to quantify the attributes. The numerical data generated by the sensory panel testers were then analyzed for their statistical significance.

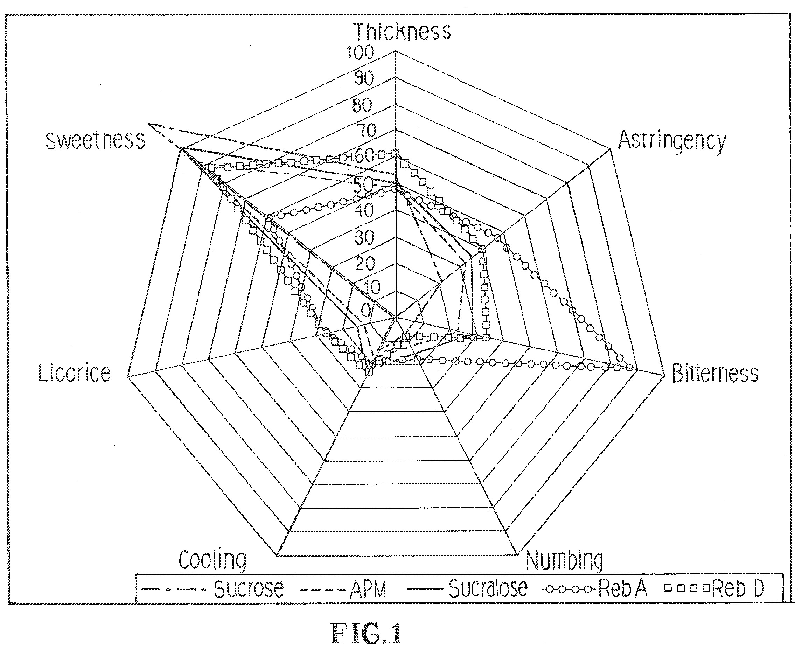

The water employed in the tests of Example 1 comprised purified water as described in detail above, and having a pH of 7.0. The initial sweetness characteristics of 1200 parts per million (ppm) Reb D in water were compared to the initial sweetness characteristics of aqueous solutions of each of 1200 ppm rebaudioside A (Reb A), sucrose, aspartame and sucralose. The rebaudioside A was a stevia extract comprising a purity of 95% by weight rebaudioside A (PureCircle USA Inc., Oak Brook, IL). The specific attributes tested by the sensory panel comprised sweetness, thickness, astringency, bitterness, numbing, cooling and licorice. The results of the initial sweetness determination are depicted in FIG. 1, and indicate that a concentration of 1200 ppm Reb D in water exhibited significantly less astringency, bitterness and numbing than the same concentration of Reb A in water.

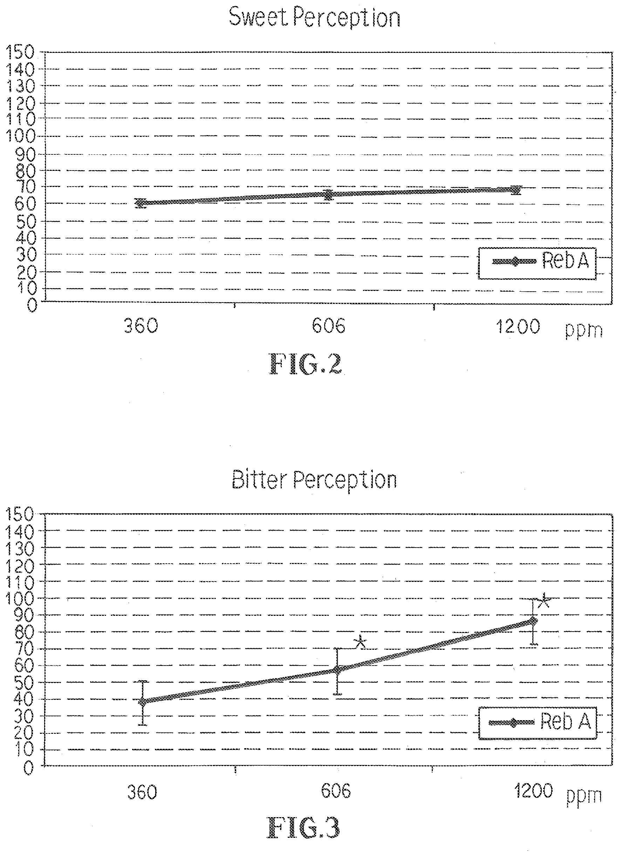

The initial sweetness characteristics of other concentrations of rebaudioside D in water were also tested and compared to the same concentrations of rebaudioside A in water. In particular, the initial sweetness characteristics of each of 360 ppm and 600 ppm of rebaudioside D in water were compared to the initial sweetness characteristics of each of 360 ppm and 600 ppm rebaudioside A in water. FIGS. 2 through 5 illustrate the differences in the characteristics of sweetness and bitterness attributes between Reb D and Reb A.

Referring to FIG. 2, the sweetness perception of Reb A is plotted as a function of Reb A concentration in water, and shows that the initial sweetness perception of Reb A increased from a value of about 60 at a concentration of 360 ppm Reb A, only to a value of about 68 at a concentration of 1200 ppm Reb A. Referring to FIG. 3, the bitterness perception of Reb A is plotted as a function of Reb A concentration in water. FIG. 3 shows that the initial bitterness perception of Reb A increased significantly, from a value of about 38 at a concentration of 360 ppm Reb A, to a value of about 85 at a concentration of 1200 ppm Reb A.

Surprisingly, it has been determined that, in contrast to the initial sweetness perception of Reb A in water, Reb D in water exhibits a significant increase in sweetness perception with an increase in Reb D concentration; however, the increase in bitterness perception of Reb D with an increase in Reb D concentration is substantially lower than that observed with Reb A.

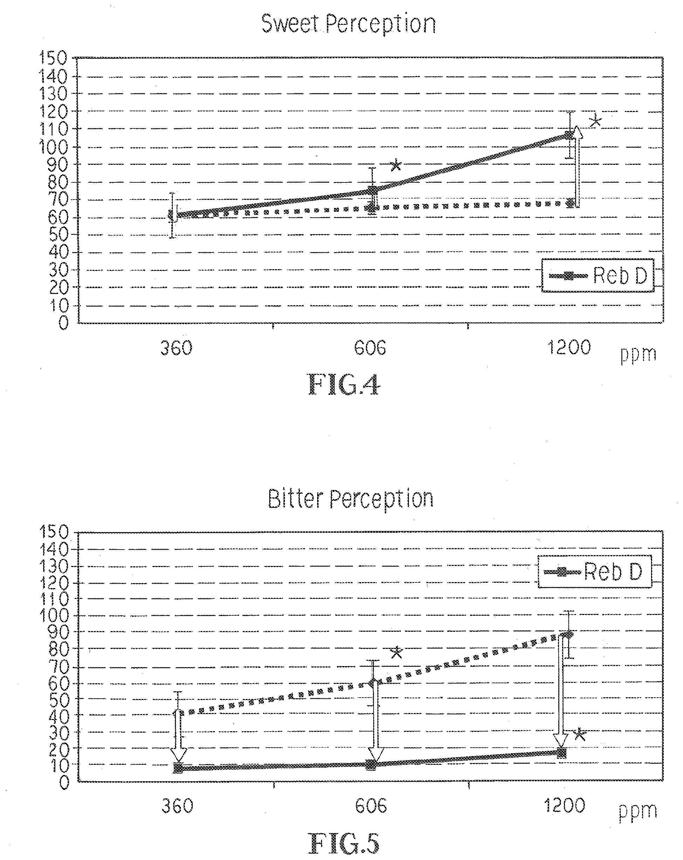

Referring to FIG. 4, the sweetness perception of Reb D is plotted as a function of Reb D concentration in water, and shows that the initial sweetness perception of Reb D increased significantly, from a value of about 62 at a concentration of 360 ppm Reb D, to a value of about 108 at a concentration of 1200 ppm Reb D. The sweetness perception results for Reb A depicted in FIG. 2 are also shown in FIG. 4, as a dotted line, to provide a direct comparison between Reb A and Reb D.

Referring to FIG. 5, the bitterness perception of Reb D is plotted as a function of Reb D concentration in water. FIG. 5 shows that the initial bitterness perception of Reb D increased from a value of about 8 at a concentration of 360 ppm Reb D, to a value of about 18 at a concentration of 1200 ppm Reb D. Similarly, the bitterness perception results for Reb A depicted in FIG. 3 are also shown in FIG. 5, as a dotted line, to provide a direct comparison between Reb A and Reb D. It was observed that although the increase in bitterness perception for Reb D in water was statistically significant, the overall value of bitterness was determined to be lower than that of the same concentration of Reb A. In particular, a concentration of 360 ppm Reb D in water exhibited a bitterness perception having a value of about 30 less than a concentration of 360 ppm Reb A in water. A concentration of 600 ppm Reb D in water exhibited a bitterness perception having a value of about 47 less than a concentration of 600 ppm Reb A in water. Last, a concentration of 1200 ppm Reb D in water exhibited a bitterness perception having a value of about 67 less than a concentration of 1200 ppm Reb A in water.

Consequently, the bitterness perception of Reb D was shown to increase substantially less with rising Reb D concentration than the increase in bitterness perception of Reb A with rising Reb A concentration. Moreover, the numerical value of the bitterness perception of Reb D was significantly lower at all concentrations in water than the numerical value of the bitterness perception of Reb A.

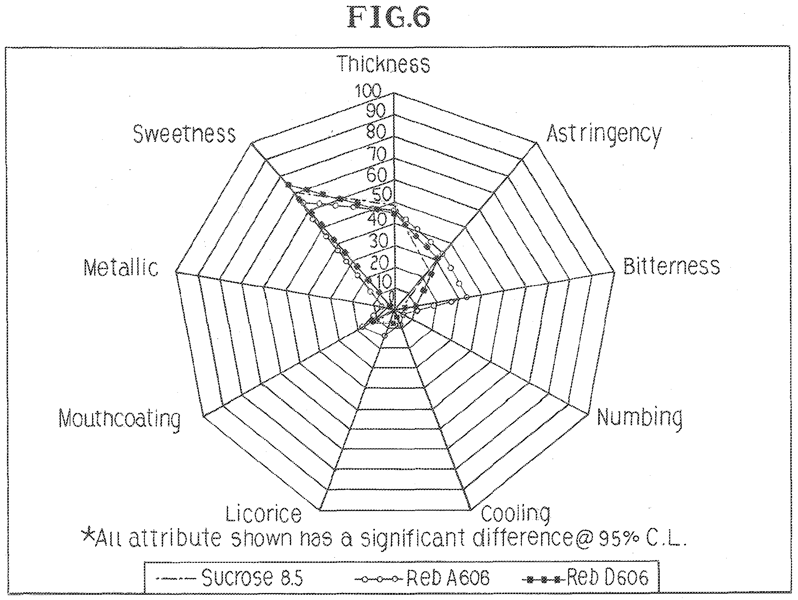

Referring to FIG. 6, the initial sweetness attributes of 606 ppm Reb D in water are depicted, as are the initial sweetness attributes of 606 ppm Reb A in water and a 8.5 brix solution of sucrose in water, for comparison. The specific attributes tested by the sensory panel comprised sweetness, thickness, astringency, bitterness, numbing, cooling, licorice, mouthcoating and metallic. The results indicate that a concentration of 606 ppm Reb D in water exhibited significantly less astringency, bitterness and numbing than the same concentration of Reb A in water. Moreover, the 606 ppm concentration of Reb D in water exhibited a similar trend for the attributes as a 1200 ppm concentration of Reb D in water, except for the licorice attribute, which exhibited a lower value for the 606 ppm Reb D than for the 1200 ppm Reb D.

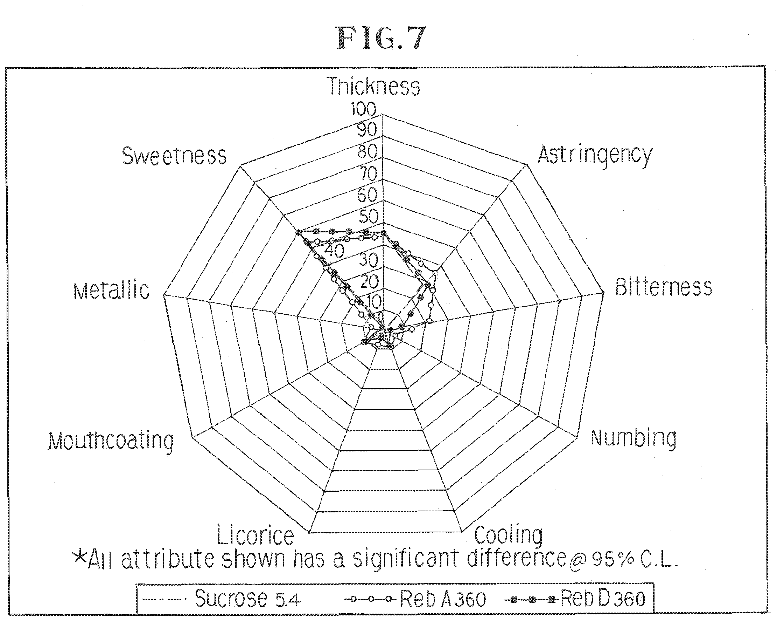

Referring to FIG. 7, the initial sweetness attributes of 360 ppm Reb D in water are depicted, as are the initial sweetness attributes of 360 ppm Reb A in water and a 5.4 brix solution of sucrose in water, for comparison. The specific attributes tested by the sensory panel comprised sweetness, thickness, astringency, bitterness, numbing, cooling, licorice, mouthcoating and metallic. Similar to the results for the 606 ppm concentrations of Reb D and Reb A, the results indicate that a concentration of 360 ppm Reb D in water exhibited significantly less astringency, bitterness and numbing than the same concentration of Reb A in water.

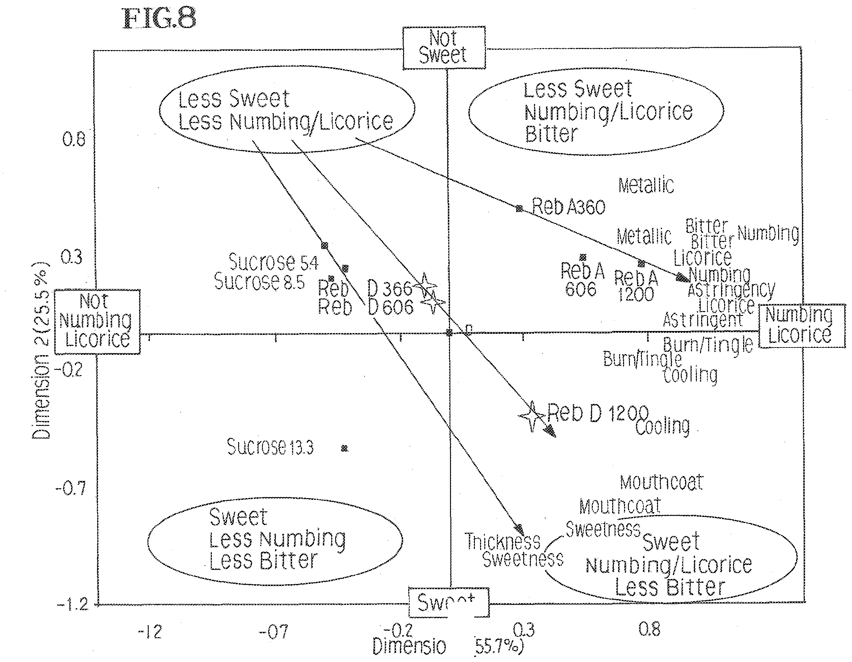

Referring to FIG. 8, the initial sweetness perception attributes determined by the sensory panel for each of the 360 ppm, 606 ppm and 1200 ppm concentrations of Reb D in water, each of the 360 ppm, 606 ppm and 1200 ppm concentrations of Reb A in water, and the 8.5 brix and 5.4 brix solutions of sucrose in water, are plotted in a two-dimensional chart. The chart illustrates that overall, Reb D exhibited less bitterness and astringency than Reb A, yet also exhibited some cooling attributes. The lower levels of Reb D (i.e., 360 ppm and 606 ppm) were characterized as less bitter, astringent, numbing and licorice than the same levels of Reb A. In summary, the plot of FIG. 8 shows that rebaudioside D is more highly correlated than rebaudioside A is to the sweetness perception attributes of sucrose.

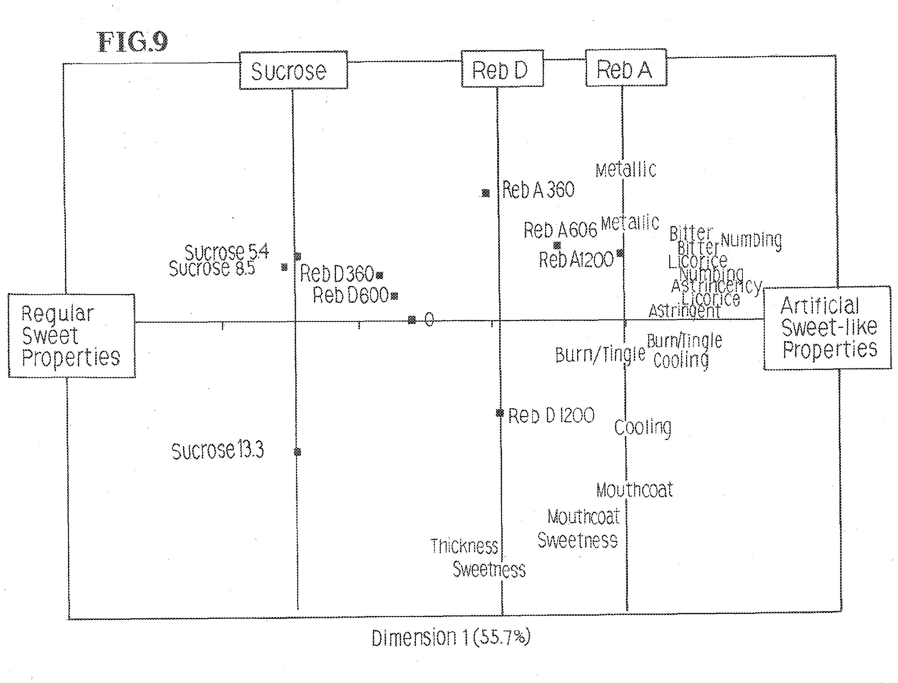

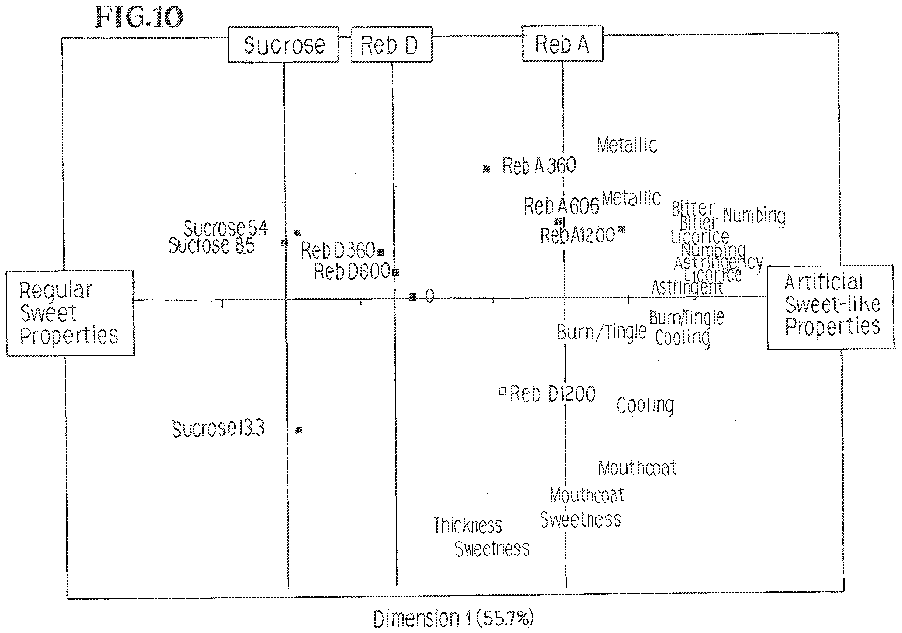

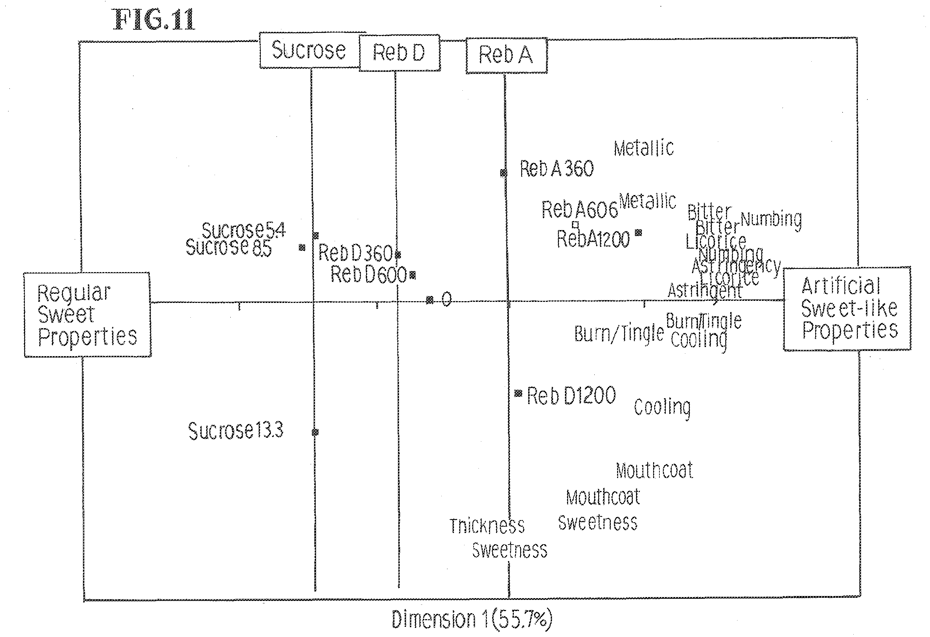

Referring to FIG. 9, a continuum of sweetener properties is depicted for rebaudioside D, rebaudioside A, and sucrose, ranging from regular sweet properties to artificial sweet-like properties. The continuum shows that a concentration of 1200 ppm Reb D in water behaved more like sucrose than did a concentration of 1200 ppm Reb A in water. Similarly, referring to FIGS. 10 and 11, the continuums show that a concentration of 606 ppm Reb D in water behaved more like sucrose than did a concentration of 606 ppm Reb A in water, and that a concentration of 360 ppm Reb D in water behaved more like sucrose than did a concentration of 360 ppm Reb A in water.

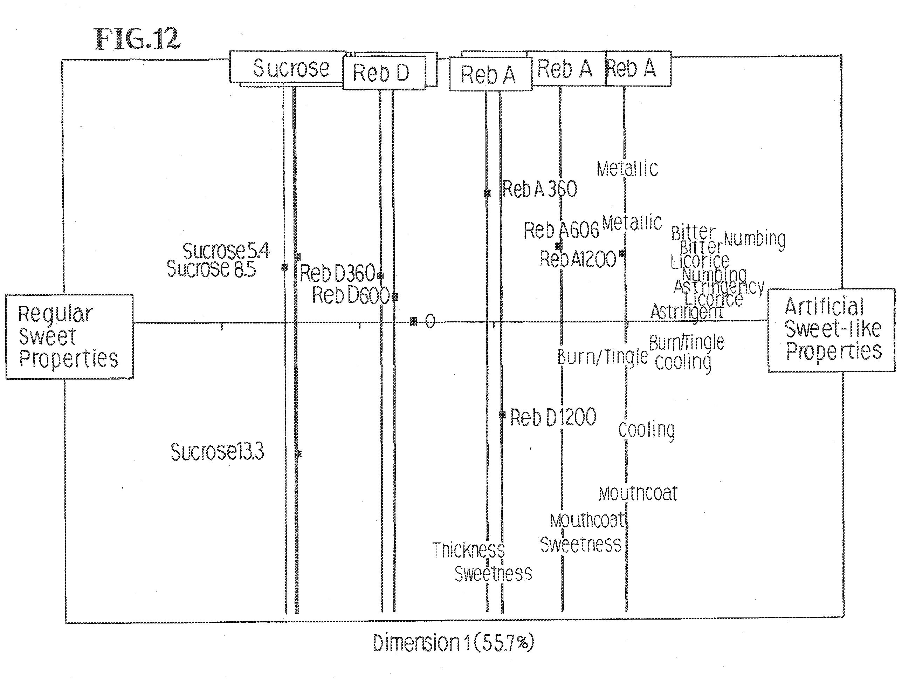

Referring to FIG. 12, all three of the concentrations of each of Reb D and Reb A are plotted to show the influence of sweetener concentration on the behavior as compared to sucrose. In particular, the concentrations of 360 ppm and 606 ppm of Reb D in water behaved more like sucrose than did any of the concentrations of Reb A. The 1200 ppm concentration of Reb D in water behaved more like sucrose than did either 606 ppm Reb A or 1200 ppm Reb A in water.

### Reference Example 2

Potential beverage base effects on the initial sweetness perception of rebaudioside D were investigated by performing tests of three concentrations of rebaudioside D (Reb D) in water, in a noncarbonated beverage base, and in a carbonated beverage base, by a sensory panel of twelve testers. The numerical data generated by the sensory panel testers were then analyzed for their statistical significance.

The water employed for the tests of this Example comprised the characteristics as described in Example 1. The noncarbonated beverage base comprised purified water, and citric acid in an amount sufficient to decrease the pH of the noncarbonated beverage base to 3.1. The carbonated beverage base comprised purified water, carbon dioxide, and citric acid in an amount sufficient to decrease the pH of the noncarbonated beverage base to about 3.1. The initial sweetness characteristics of 606 parts per million (ppm) Reb D in water were compared to the initial sweetness characteristics of 606 ppm Reb D in noncarbonated beverage base and 606 ppm Reb D in carbonated beverage base.

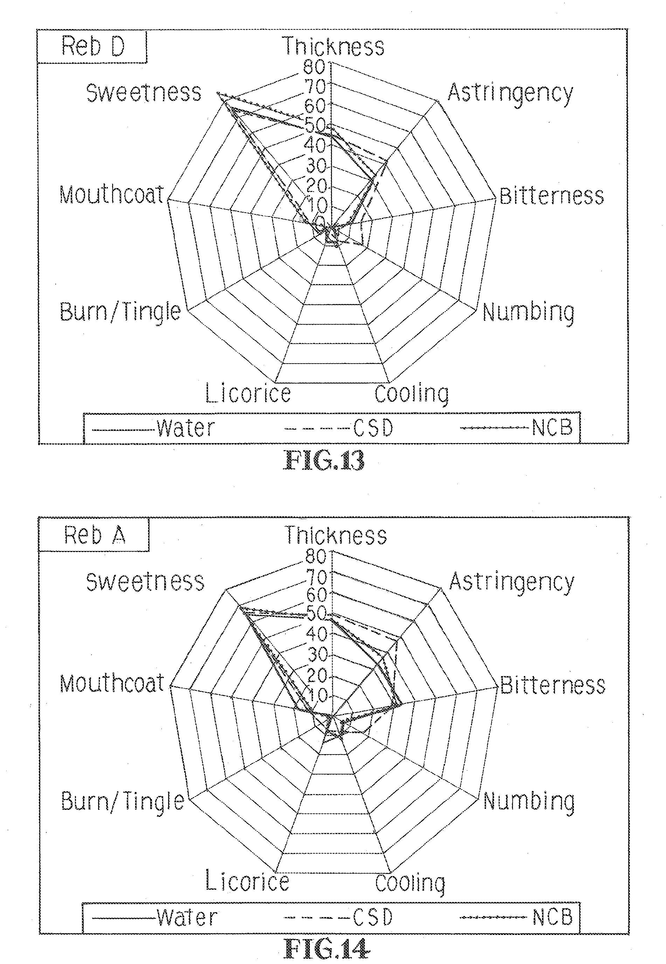

The specific attributes tested by the sensory panel comprised sweetness, thickness, astringency, bitterness, numbing, cooling, licorice, burn/tingle and mouthcoat. The results of the initial sweetness determination for a concentration of 606 ppm Reb D in the three bases are depicted in FIG. 13, and the similarities between the attribute plots indicate that there was no significant interaction between the Reb D and any of the three beverage bases. It was observed that the carbonated beverage base exhibited a higher astringency, burning/tingling and numbing attributes than other bases.

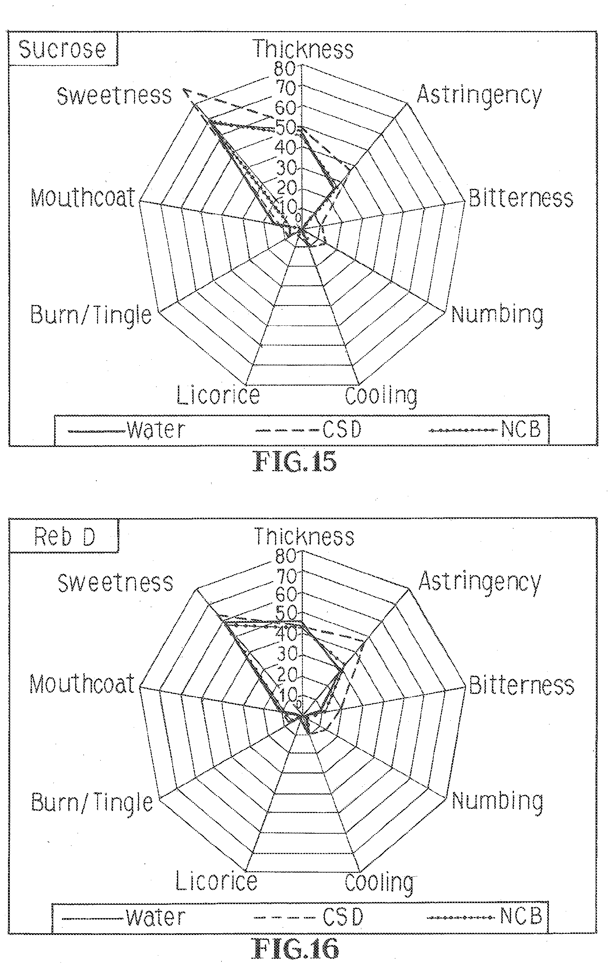

Referring to FIG. 14, the initial sweetness perception for a concentration of 606 ppm Reb A in the three bases of water, noncarbonated beverage base and carbonated beverage base are depicted. The similarities between the attribute plots in FIG. 14 show that there was no significant interaction between the Reb A and any of the three beverage bases. Similarly, referring to FIG. 15, the initial sweetness perception for a concentration of 8.5 brix sucrose in the three bases of water, noncarbonated beverage base and carbonated beverage base are depicted. The similarities between the attribute plots in FIG. 15 show that there was no significant interaction between the sucrose and any of the three beverage bases.

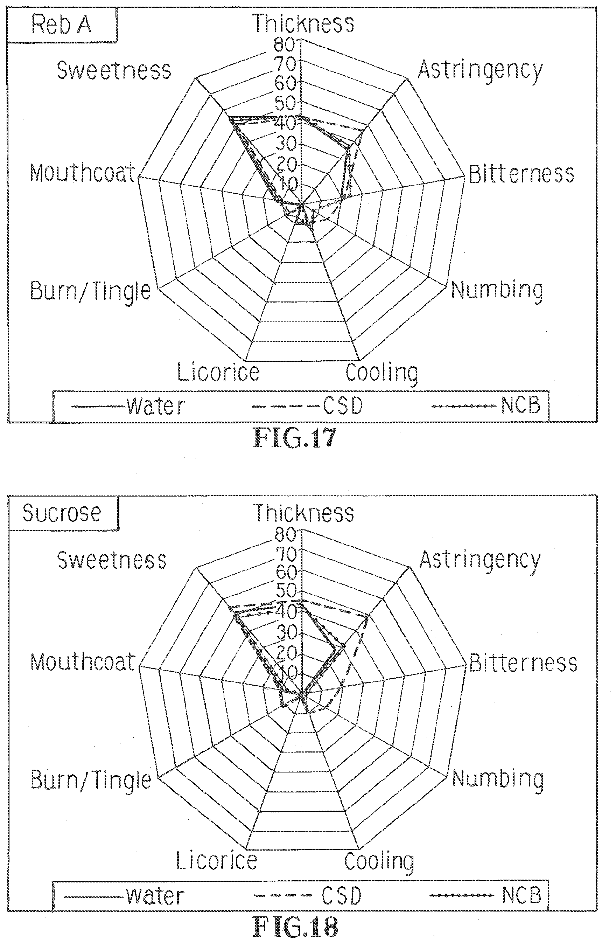

Referring to FIG. 16, the results of the initial sweetness determination for a concentration of 360 ppm Reb D in the three bases are depicted. The similarities between the attribute plots in FIG. 16 indicate that there was no significant interaction between the Reb D and any of the three beverage bases. Referring to FIG. 17, the initial sweetness perception for a concentration of 360 ppm Reb A in the three bases of water, noncarbonated beverage base and carbonated beverage base are depicted. The similarities between the attribute plots in FIG. 17 show that there was no significant interaction between the Reb A and any of the three beverage bases. Similarly, referring to FIG. 18, the initial sweetness perception for a concentration of 5.4 brix sucrose in the three bases of water, noncarbonated beverage base and carbonated beverage base are depicted. The similarities between the attribute plots in FIG. 18 show that there was no significant interaction between the sucrose and any of the three beverage bases.

The direct comparison of sweetness perception by a sensory panel for each of the beverage bases of water, noncarbonated beverage base and carbonated beverage base is provided below in Table 1. For the 360 ppm sweetener concentration in water, Reb D exhibited a sweetness perception 15% greater than provided by Reb A, and Reb D exhibited a bitterness perception 63% less than provided by Reb A. For the 360 ppm sweetener concentration in the carbonated beverage base, Reb D exhibited a sweetness perception 25% greater than provided by Reb A, and Reb D exhibited a bitterness perception 12% less than provided by Reb A. For the 360 ppm sweetener concentration in noncarbonated beverage base, Reb D exhibited a sweetness perception 13% greater than provided by Reb A, and Reb D exhibited a bitterness perception 56% less than provided by Reb A.

For the 606 ppm sweetener concentration in water, Reb D exhibited a sweetness perception 17% greater than provided by Reb A, and Reb D exhibited a bitterness perception 70% less than provided by Reb A. For the 606 ppm sweetener concentration in the carbonated beverage base, Reb D exhibited a sweetness perception 12% greater than provided by Reb A, and Reb D exhibited a bitterness perception 50% less than provided by Reb A. For the 606 ppm sweetener concentration in noncarbonated beverage base, Reb D exhibited a sweetness perception 24% greater than provided by Reb A, and Reb D exhibited a bitterness perception 75% less than provided by Reb A.

Accordingly, 606 ppm Reb D provided a greater average sweetness in each of the three beverage bases than did 606 ppm Reb A in any of the three beverage bases. 360 ppm Reb D also provided a greater average sweetness in each of the three beverage bases than did 360 ppm Reb A in any of the three beverage bases. Moreover, 606 ppm Reb D provided a lower average bitterness in each of the three beverage bases than did 606 ppm Reb A in any of the three beverage bases. Similarly, 360 ppm Reb D provided a lower average bitterness in each of the three beverage bases than did 360 ppm Reb A in any of the three beverage bases.

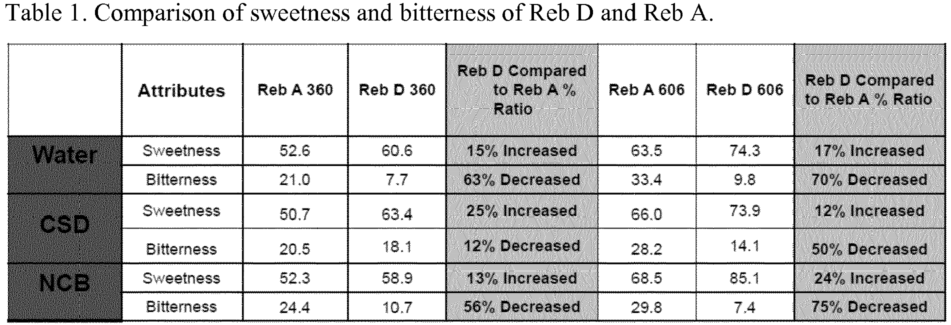

Moreover, the direct comparison of sweetness perception by a sensory panel averaged across all three beverage bases is provided below in Table 2. For the 1200 ppm sweetener concentration, the ratio of sweetness provided by Reb D to Reb A was 150%, and the ratio of bitterness provided by Reb D to Reb A was 40%. For the 606 ppm sweetener concentration, the ratio of sweetness provided by Reb D to Reb A was 117%, and the ratio of bitterness provided by Reb D to Reb A was 30%. Last, for the 360 ppm sweetener concentration, the ratio of sweetness provided by Reb D to Reb A was 115%, and the ratio of bitterness provided by Reb D to Reb A was 37%.

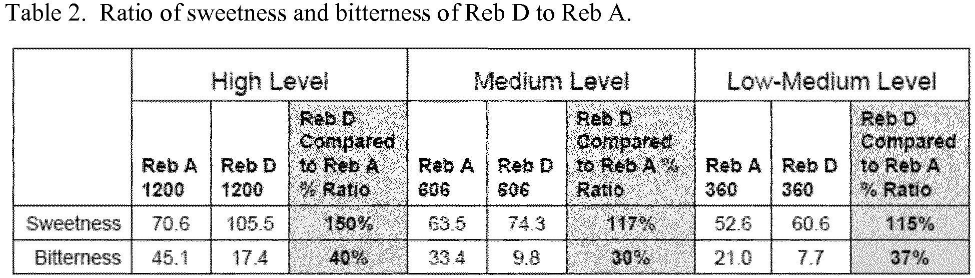

The discovery that rebaudioside D is a suitable sweetener and exhibits a higher sweetness and lower bitterness than the rebaudioside A in beverage bases such as water, a carbonated beverage base, and a noncarbonated beverage base, provides a variety of advantages. One such advantage is that in some or all embodiments of the beverage products disclosed here, little or no taste masking agents may be needed to mask bitterness attributes or other off-tastes when employing a Reb D sweetener. Another advantage is that a lower concentration of rebaudioside D than rebaudioside A would be required to provide the same level of sweetness perception, with concomitantly less bitterness also imparted to the comestible. Other advantages would be readily apparent to those of skill in the art given the benefit of this disclosure.

### Example 3

Potential sweetener blend effects on the perception of sweetness, bitterness and anise/licorice flavor in carbonated cola beverages were investigated by performing tests of five sweetener variations of Reb D, Reb A, and blends of Reb D and Reb A, in a carbonated cola beverage base, by a sensory panel of twelve trained testers. The numerical data generated by the sensory panel testers were then analyzed for their statistical significance.

The water employed for the tests of this Example comprised the characteristics as described in Example 1. The carbonated cola beverage compositions were prepared by first making a 2-liter syrup comprising 2.04 grams (g) sodium benzoate, 4.41 g phosphoric acid, 1.27 g caffeine, 1.63 g citric acid, 38.63 g cola flavors, and one of the following as the sweetener: a) 4.8 g Reb A; b) 3.6 g Reb A + 1.2 g Reb D; c) 2.4 g Reb A + 2.4 g Reb D; d) 1.2 g Reb A + 3.6 g Reb D; and e) 4.8 g Reb D. Purified water was added until the syrup was 2 liters in volume. Then, 50 mL portions of the syrup were added respectively to 250 mL portions of carbonated water, i.e., a five-plus-one "throw", to obtain finished cola drinks. The drinks were sealed in 10 ounce (i.e., 295.7 mL) glass bottles and stored at seventy degrees Fahrenheit for one week. The finished cola drinks contained the following concentrations of Reb D and Reb A: a) 400 ppm Reb A; b) 300 ppm Reb A + 100 ppm Reb D; c) 200 ppm Reb A + 200 ppm Reb D; d) 100 ppm Reb A + 300 ppm Reb D; and e) 400 ppm Reb D.

Sensory evaluations were performed to provide comparative analysis of organoleptic characteristics of carbonated cola beverages containing the above-identified sweetener(s). The rebaudioside D was a stevia extract having a purity of at least 93% by weight rebaudioside D (Reb D). The rebaudioside A was a stevia extract comprising a purity of 95% by weight rebaudioside A (PureCircle USA Inc., Oak Brook, IL).

The specific attributes tested by the sensory panel comprised sweetness, bitterness and anise/licorice flavor. Sensory panelists were served approximately three fluid ounces of product in clear plastic cups coded with random three-digit numbers. Ambient filtered water and saltine crackers were provided to the panelists for cleansing the palate between samples. Two evaluations (i.e., one replicate) were obtained from each panelist, and panelists were instructed to indicate the intensity of each sensory characteristic by assigning a value between 0 (no intensity) and 15 (maximum intensity). Mean values were calculated for each attribute and for each time point for the aftertaste attributes. Analysis of Variance was employed to determine which, if any, of the attributes was statistically significant. For the statistically significant attributes, Tukey's HSD Test was used to determine which samples were statistically significantly different for that particular attribute.

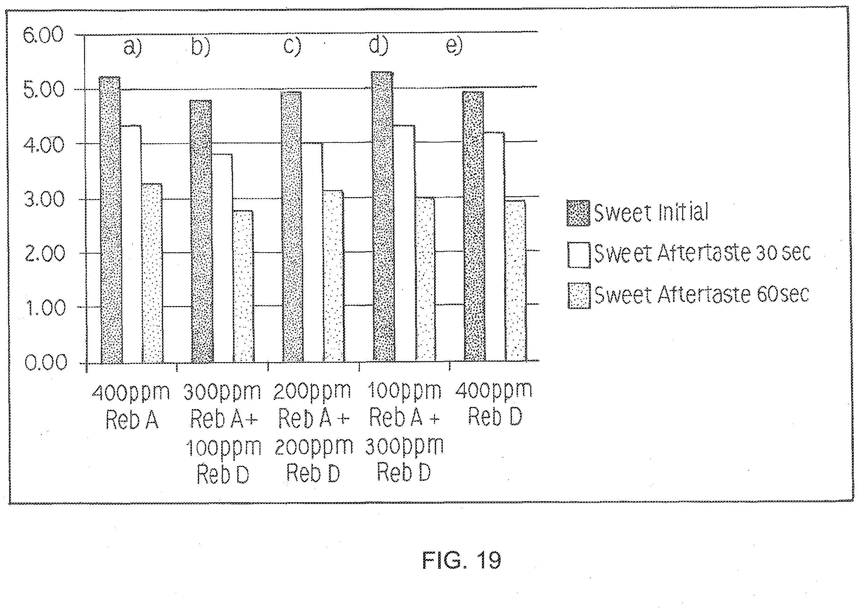

The results of each of the comparative initial sweetness determination, sweetness aftertaste at 30 seconds, and sweetness aftertaste at 60 seconds, are depicted in FIG. 19. The results indicate no statistically significant differences between the initial, 30 second aftertaste or 60 second aftertaste of sweetness for any of the samples a) through e) in the carbonated cola base.

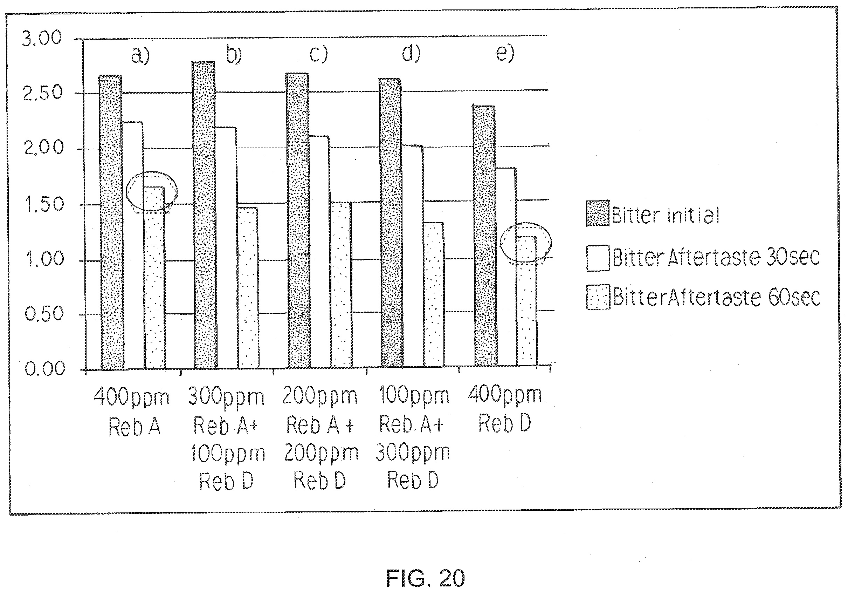

The results of each of the comparative initial bitterness determination, bitterness aftertaste after 30 seconds, and bitterness aftertaste at 60 seconds, are depicted in FIG. 20. The results indicate that there is a statistically significant higher bitterness aftertaste at 60 seconds exhibited by the sample a) (i.e., the 400 ppm Reb A sweetener) than exhibited by sample e) (i.e., the 400 ppm Reb D sweetener), in the carbonated cola base. These results are circled on FIG. 20. Further referring to FIG. 20, there was no statistically significant difference in any of the initial, 30 second aftertaste or 60 second aftertaste of bitterness for any of the samples b) through d) (i.e., the blends of Reb A and Reb D), in the carbonated cola base. It should be understood, however, that the data contains the typical experimental errors, and notwithstanding individual outliers or potentially aberrant data points, a general trend can be seen in FIG. 20. In particular, FIG. 20 illustrates a trend of decreasing bitterness perception as the Reb A concentration decreases and the Reb D concentration increases, for each of the initial bitterness determination, bitterness aftertaste after 30 seconds and bitterness aftertaste at 60 seconds.

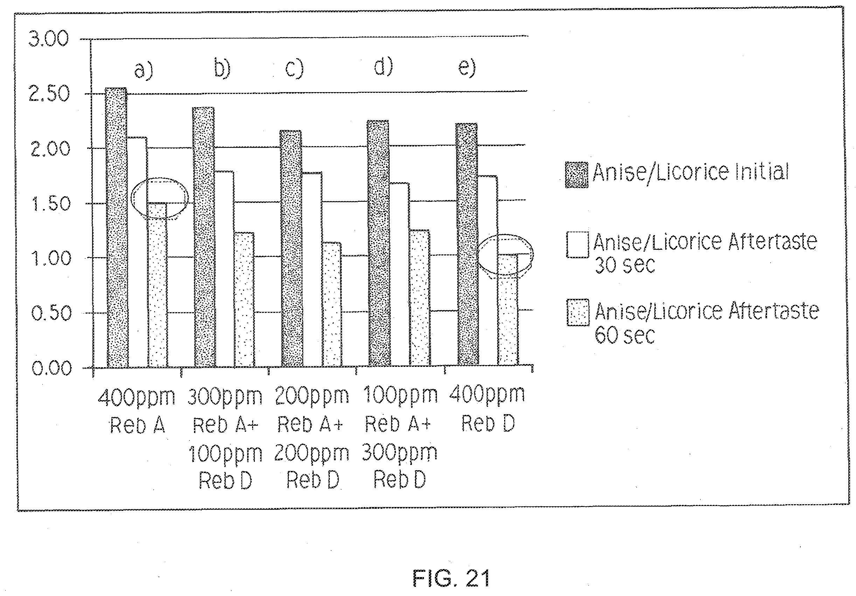

The results of each of the comparative initial anise/licorice flavor determination, anise/licorice aftertaste after 30 seconds, and anise/licorice aftertaste at 60 seconds, are depicted in FIG. 21. The results indicate that there is a statistically significant higher anise/licorice aftertaste at 60 seconds exhibited by the sample a) (i.e., the 400 ppm Reb A sweetener) than exhibited by sample e) (i.e., the 400 ppm Reb D sweetener), in the carbonated cola base. These results are circled on FIG. 21. Further referring to FIG. 21, there was no statistically significant difference in any of the initial, 30 second aftertaste or 60 second aftertaste of anise/licorice for any of the samples b) through d) (i.e., the blends of Reb A and Reb D), in the carbonated cola base. Similar to the bitterness perception results, however, a general trend can also be seen in FIG. 21. In particular, FIG. 21 illustrates a trend of decreasing anise/licorice flavor perception as the Reb A concentration decreases and the Reb D concentration increases, for each of the initial anise/licorice flavor determination, anise/licorice aftertaste after 30 seconds and anise/licorice aftertaste at 60 seconds.

### Example 4

A reduced calorie carbonated cola beverage is prepared comprising Reb D, Reb A and sucrose as sweetening ingredients. The water employed for the beverage of this Example comprises the characteristics as described in Example 1. The carbonated cola beverage provides an approximately 50% reduction in calories as compared to a full calorie version, namely about 50 calories per eight ounces of reduced calorie cola beverage as compared to about 100 calories per eight ounces of full calorie cola beverage.

The reduced calorie carbonated cola beverage composition is prepared by first making a 2-liter syrup comprising 2.04 grams (g) sodium benzoate, 4.41 g phosphoric acid, 1.27 g caffeine, 1.63 g citric acid, 38.63 g cola flavors, 1.8 g Reb D, 1.8 g Reb A, and 720 g high fructose corn syrup comprising 55% fructose. Purified water is added until the syrup was 2 liters in volume. Then, 50 mL portions of the syrup are added respectively to 250 mL portions of carbonated water, i.e., a five-plus-one "throw", to obtain finished reduced calorie cola drinks comprising 150 ppm Reb D and 150 ppm Reb A. The drinks are sealed in 10 ounce (i.e., 295.7 mL) glass bottles and stored at seventy degrees Fahrenheit for one week. The finished reduced calorie cola drinks exhibit less bitterness than the same finished reduced calorie cola drink that instead contains 300 ppm Reb A and no Reb D.

### Example 5

A reduced calorie carbonated cola beverage is prepared comprising Reb D, Reb A and sucrose as sweetening ingredients. The water employed for the beverage of this Example comprises the characteristics as described in Example 1. The carbonated cola beverage provides an approximately 25% reduction in calories as compared to a full calorie version, namely about 75 calories per eight ounces of reduced calorie cola beverage as compared to about 100 calories per eight ounces of full calorie cola beverage.

The reduced calorie carbonated cola beverage composition is prepared by first making a 2-liter syrup comprising 2.04 grams (g) sodium benzoate, 4.41 g phosphoric acid, 1.27 g caffeine, 1.63 g citric acid, 38.63 g cola flavors, 0.9 g Reb D, 0.9 g Reb A, and 1,080 g high fructose corn syrup comprising 55% fructose. Purified water is added until the syrup was 2 liters in volume. Then, 50 mL portions of the syrup are added respectively to 250 mL portions of carbonated water, i.e., a five-plus-one "throw", to obtain finished reduced calorie cola drinks comprising 75 ppm Reb D and 75 ppm Reb A. The drinks are sealed in 10 ounce (i.e., 295.7 mL) glass bottles and stored at seventy degrees Fahrenheit for one week. The finished reduced calorie cola drinks exhibit less bitterness than the same finished reduced calorie cola drink that instead contains 150 ppm Reb A and no Reb D.

Those of ordinary skill in the art will understand that, for convenience, some ingredients are described here in certain cases by reference to the original form of the ingredient in which it is used in formulating or producing the beverage product. Such original form of the ingredient may differ from the form in which the ingredient is found in the finished beverage product. Thus, for example, in certain exemplary embodiments of the beverage products according to this disclosure, sucrose and liquid sucrose would typically be substantially homogenously dissolved and dispersed in the comestible products. Likewise, other ingredients identified as a solid, concentrate (e.g., juice concentrate), etc. would typically be homogeneously dispersed throughout the beverage or throughout the beverage concentrate, rather than remaining in their original form. As another example, an ingredient described as a salt may exist in a beverage in dissolved form. Thus, reference to the form of an ingredient of a beverage product formulation should not be taken as a limitation on the form of the ingredient in the beverage product, but rather as a convenient means of describing the ingredient as an isolated component of the product formulation.

It should be understood that the use of a singular indefinite or definite article (e.g., "a," "an," "the," etc.) in this disclosure and in the following claims follows the traditional approach in patents of meaning "at least one" unless in a particular instance it is clear from context that the term is intended in that particular instance to mean specifically one and only one. Likewise, the term "comprising" is open ended, not excluding additional items, features, components, etc.

## Claims

1. A carbonated cola beverage product comprising:
carbonated water;
acidulant comprising at least one acid;
between 200 ppm and 700 ppm rebaudioside D;
rebaudioside A present in a sweetening amount; and
flavoring comprising cola flavoring.

2. The carbonated cola beverage product of claim 1, wherein the rebaudioside D provides at least 20% of the total sweetening of the beverage product.

3. The carbonated cola beverage product of claim 2, wherein every sweetening ingredient in the beverage product is a high intensity sweetener.

4. The carbonated cola beverage product of claim 3, wherein every sweetening ingredient in the beverage product is a natural high intensity sweetener.

5. The carbonated cola beverage product of claim 1, wherein rebaudioside D provides at least 10% of the total sweetening of the beverage.

6. The carbonated cola beverage product of claim 1, wherein rebaudioside D is at least 10 wt. percent of the total weight of sweetening ingredients in the beverage product.

7. The carbonated cola beverage product of claim 1, wherein every sweetening ingredient in the beverage product is a high intensity sweetener and rebaudioside D is at least 10 wt. percent of the total weight of sweetening ingredients in the beverage product.

8. The carbonated cola beverage product of claim 1, wherein the at least one acid is selected from the group consisting of phosphoric acid, citric acid, malic acid, tartaric acid, formic acid, gluconic acid, lactic acid, fumaric acid, adipic acid, succinic acid, maleic acid, cinnamic acid, glutaric acid, and mixtures of any of them.

9. The carbonated cola beverage product of claim 1, wherein the acidulant consists essentially of lactic acid, tartaric acid and citric acid.

10. The carbonated cola beverage product of claim 1, wherein the acidulant comprises lactic acid and at least one of tartaric and citric acids.

11. The carbonated cola beverage product of claim 1, wherein the rebaudioside D has a purity of 95% or greater by weight of rebaudioside D.

12. The carbonated cola beverage product of claim 1, wherein the rebaudioside D is provided by a supersaturated solution of rebaudioside D or a thermally stable anhydrous form of rebaudioside D.

13. The carbonated cola beverage product of claim 1, wherein the beverage product is a diet carbonated cola soft drink.

## Patentansprüche

1. Ein kohlensäurehaltiges Cola-Getränkeprodukt umfassend:
kohlensäurehaltiges Wasser;
Säuerungsmittel umfassend mindestens eine Säure;
zwischen 200 ppm und 700 ppm Rebaudiosid D;
Rebaudiosid A vorhanden in einer süßenden Menge; und
Aromastoffe umfassend Cola-Aroma.

2. Das kohlensäurehaltige Cola-Getränkeprodukt gemäß Anspruch 1, wobei das Rebaudiosid D mindestens 20% der gesamten Süße des Getränkeprodukts ausmacht.

3. Das kohlensäurehaltige Cola-Getränkeprodukt gemäß Anspruch 2, wobei jeder süßende Inhaltsstoff in dem Getränkeprodukt ein Süßstoff von hoher Intensität ist.

4. Das kohlensäurehaltiges Cola-Getränkeprodukt gemäß Anspruch 3, wobei jeder süßende Inhaltsstoff in dem Getränkeprodukt ein natürlicher Süßstoff von hoher Intensität ist.

5. Das kohlensäurehaltige Cola-Getränkeprodukt gemäß Anspruch 1, wobei Rebaudiosid D mindestens 10% der gesamten Süße des Getränkeprodukts ausmacht.

6. Das kohlensäurehaltige Cola-Getränkeprodukt gemäß Anspruch 1, wobei das Rebaudiosid D mindestens 10 Gewichtsprozent des gesamten Gewichts von süßenden Inhaltsstoffen im Getränkeprodukts ist.

7. Das kohlensäurehaltige Cola-Getränkeprodukt gemäß Anspruch 1, wobei jeder süßende Inhaltsstoff in dem Getränkeprodukt ein Süßstoff von hoher Intensität ist und Rebaudiosid D mindestens 10 Gewichtsprozent des gesamten Gewichts von süßenden Inhaltsstoffen im Getränkeprodukts ist.

8. Das kohlensäurehaltige Cola-Getränkeprodukt gemäß Anspruch 1, wobei die mindestens eine Säure ausgewählt ist aus der Gruppe bestehend aus Phosphorsäure, Zitronensäure, Apfelsäure, Weinsäure, Ameisensäure, Gluconsäure, Milchsäure, Fumarsäure, Adipinsäure, Bernsteinsäure, Maleinsäure, Zimtsäure, Glutarsäure und Mischungen von jeder von diesen.

9. Das kohlensäurehaltige Cola-Getränkeprodukt gemäß Anspruch 1, wobei das Säuerungsmittel im Wesentlichen aus Milchsäure, Weinsäure und Zitronensäure besteht.

10. Das kohlensäurehaltige Cola-Getränkeprodukt gemäß Anspruch 1, wobei das Säuerungsmittels Milchsäure und mindestens eine von Wein- und Zitronensäuren umfasst.

11. Das kohlensäurehaltige Cola-Getränkeprodukt gemäß Anspruch 1, wobei das Rebaudiosid D eine Reinheit von 95% oder höher nach Gewicht des Rebaudiosid D hat.

12. Das kohlensäurehaltige Cola-Getränkeprodukt gemäß Anspruch 1, wobei das Rebaudiosid D durch eine übersättigte Lösung von Rebaudiosid D oder einer thermisch stabilen wasserfreien Form von Rebaudiosid D bereit gestellt wird.

13. Das kohlensäurehaltige Cola-Getränkeprodukt gemäß Anspruch 1, wobei das Getränkeprodukt ein diätetisches kohlensäurehaltiges Cola-Erfrischungsgetränk ist.

## Revendications

1. Produit de boisson gazeuse au cola, comprenant :
de l'eau gazeuse ;
un acidulant comprenant au moins un acide ;
entre 200 ppm et 700 ppm de rébaudioside D
du rébaudioside A présent en une quantité édulcorante ; et
un arôme comprenant un arôme de cola.

2. Produit de boisson gazeuse au cola selon la revendication 1, dans lequel le rébaudioside D apporte au moins 20 % de la totalité de l'édulcorant du produit de boisson.

3. Produit de boisson gazeuse au cola selon la revendication 2, dans lequel chaque ingrédient édulcorant présent dans le produit de boisson est un édulcorant d'intensité élevée.

4. Produit de boisson gazeuse au cola selon la revendication 3, dans lequel chaque ingrédient édulcorant présent dans le produit de boisson est un édulcorant naturel d'intensité élevée.

5. Produit de boisson gazeuse au cola selon la revendication 1, dans lequel le rébaudioside D apporte au moins 10 % de la totalité de l'édulcorant de la boisson.

6. Produit de boisson gazeuse au cola selon la revendication 1, dans lequel le rébaudioside D représente au moins 10 % en poids du poids total des ingrédients édulcorants présents dans le produit de boisson.

7. Produit de boisson gazeuse au cola selon la revendication 1, dans lequel chaque ingrédient édulcorant présent dans le produit de boisson est un édulcorant d'intensité élevée et le rébaudioside D représente au moins 10 % en poids du poids total des ingrédients édulcorants présents dans le produit de boisson.

8. Produit de boisson gazeuse au cola selon la revendication 1, dans lequel l'au moins un acide est choisi dans le groupe constitué par l'acide phosphorique, l'acide citrique, l'acide malique, l'acide tartrique, l'acide formique, l'acide gluconique, l'acide lactique, l'acide fumarique, l'acide adipique, l'acide succinique, l'acide maléique, l'acide cinnamique, l'acide glutarique, et les mélanges de l'un quelconque avec un autre d'entre eux.

9. Produit de boisson gazeuse au cola selon la revendication 1, dans lequel l'acidulant se compose essentiellement d'acide lactique, d'acide tartrique et d'acide citrique.

10. Produit de boisson gazeuse au cola selon la revendication 1, dans lequel l'acidulant comprend de l'acide lactique et au moins un acide parmi l'acide tartrique et l'acide citrique.

11. Produit de boisson gazeuse au cola selon la revendication 1, dans lequel le rébaudioside D a une pureté supérieure ou égale à 95 % par rapport au poids du rébaudioside D.

12. Produit de boisson gazeuse au cola selon la revendication 1, dans lequel le rébaudioside D est apporté par une solution sursaturée de rébaudioside D ou par une forme anhydre stable thermiquement de rébaudioside D.

13. Produit de boisson gazeuse au cola selon la revendication 1, dans lequel le produit de boisson est une boisson gazeuse non alcoolisée diététique au cola.
